(19) Europäisches Patentamt
European Patent Office
Office européen des brevets

(11) **EP 4 319 460 A1**

(12) **EUROPEAN PATENT APPLICATION**
published in accordance with Art. 153(4) EPC

(43) Date of publication:
**07.02.2024 Bulletin 2024/06**

(21) Application number: **22794747.0**

(22) Date of filing: **21.04.2022**

(51) International Patent Classification (IPC):
**H04W 76/16** $^{(2018.01)}$

(52) Cooperative Patent Classification (CPC):
**H04W 74/08; H04W 76/16**

(86) International application number:
**PCT/CN2022/088247**

(87) International publication number:
**WO 2022/228276 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021 CN 202110484724**

(71) Applicant: **Huawei Technologies Co., Ltd.
Shenzhen, Guangdong 518129 (CN)**

(72) Inventors:
• **WANG, Ting
Shenzhen, Guangdong 518129 (CN)**
• **LYU, Yongxia
Shenzhen, Guangdong 518129 (CN)**
• **WANG, Jun
Shenzhen, Guangdong 518129 (CN)**
• **MA, Jianglei
Shenzhen, Guangdong 518129 (CN)**
• **ZHANG, Liqing
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD, APPARATUS AND SYSTEM**

(57) Embodiments of this application provide a communication method, apparatus, and system, and relate to the field of communication technologies, to resolve a technical problem that a capacity of a communication system is limited and communication performance of the communication system is affected because CA and DC cannot support an inter-RAT communication mechanism. The method includes: A first communication apparatus obtains first configuration information, and performs carrier aggregation communication on at least two receive carriers based on the first configuration information. The first configuration information may indicate the first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

FIG. 8

**Description**

This application claims priority to Chinese Patent Application No. 202110484724.8, filed with the China National Intellectual Property Administration on April 30, 2021 and entitled "COMMUNICATION METHOD, APPARATUS, AND SYSTEM", which is incorporated herein by reference in its entirety.

**TECHNICAL FIELD**

This application relates to the field of communication technologies, and in particular, to a communication method, apparatus, and system.

**BACKGROUND**

In an existing communication system, a terminal device or a network device may aggregate a plurality of carriers based on carrier aggregation (carrier aggregation, CA), to implement a relatively large transmission bandwidth and improve an uplink/downlink transmission rate; or a terminal device may perform offloading transmission between two links based on dual connectivity (dual connectivity, DC), and perform carrier aggregation on each link, to increase a single-user throughput.

Different communication standards may correspond to different carriers. The communication standard may include a second generation (2nd generation, 2G) standard, a 3G standard, a 4G standard, a 5G standard, a 6G standard, or another communication standard.

To further increase a communication capacity of a communication system, an inter-radio access technology (inter-radio access technology, inter-RAT) communication mechanism is provided. However, the CA supports carrier aggregation only on carriers of a same communication standard. To be specific, when performing carrier aggregation, the terminal device or the network device can perform carrier aggregation communication only based on carriers of a same communication standard. In addition, communication of two links in the DC uses an independent scheduler, and consequently flexible coordination between carriers of different radio access technologies (radio access technology, RAT) cannot be implemented, and spectral efficiency is reduced. In other words, the existing CA and DC cannot well support the inter-RAT communication mechanism. As a result, a capacity of the communication system is limited, and communication performance of the communication system is affected.

SUMMARY

In view of this, this application provides a communication method, apparatus, and system, to resolve a technical problem that a capacity of a communication system is limited and communication performance of the communication system is affected because CA and DC cannot support an inter-RAT communication mechanism.

According to a first aspect, an embodiment of this application provides a communication method. The method includes: A first communication apparatus obtains first configuration information, and performs carrier aggregation communication on at least two receive carriers based on the first configuration information. The first configuration information indicates the first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

Based on the first aspect, the first communication apparatus may perform carrier aggregation communication on receive carriers of different communication standards based on the first configuration information. This can effectively support an inter-RAT communication mechanism, and increase a capacity of a communication system. In addition, this can improve spectral efficiency, and improve communication performance of the communication system. This solution can implement inter-RAT receive carrier aggregation, implement flexible unified scheduling and transmission of a plurality of downlink communication standards, and improve downlink communication performance.

In a possible design, the first configuration information includes configuration information of at least two receive standard carrier groups, where the configuration information of the receive standard carrier group includes identification information of the receive standard carrier group and identification information of at least one receive carrier in the receive standard carrier group, and the identification information of the receive standard carrier group indicates a communication standard corresponding to the receive standard carrier group.

Based on this possible design, a multi-RAT receive carrier configuration may be implemented by configuring the configuration information of the receive standard carrier group, and a receive carrier is added to or deleted from the configuration information of the receive standard carrier group, to flexibly receive carrier configurations of a plurality of communication standards.

In a possible design, the first configuration information includes identification information of the at least two receive standard carrier groups and identification information of at least one receive carrier in the receive standard carrier group, where the identification information of the receive standard carrier group indicates a communication standard corresponding to the receive standard carrier group.

Based on this possible design, a multi-RAT receive carrier configuration may be implemented by configuring the identification information of the receive standard carrier group, and a communication standard of a receive carrier is added to or deleted from the identification information of the receive standard carrier group, to flexibly receive carrier configurations of a plurality of communication standards.

Based on the foregoing two possible designs, the first communication apparatus may determine a receive carrier based on identification information of a receive standard carrier group and identification information of the receive carrier in the first configuration information, and determine a communication standard of the receive carrier based on the identification information of the receive standard carrier group corresponding to the receive carrier.

In a possible design, the first configuration information includes identification information and standard information of the at least two receive carriers, where the standard information indicates a communication standard of a receive carrier corresponding to the identification information.

Based on this possible design, a multi-RAT receive carrier configuration may be implemented by directly configuring a receive carrier, and a receive carrier is directly added to or deleted from the first configuration information, to flexibly receive carrier configurations of a plurality of communication standards. The first communication apparatus may determine a receive carrier based on identification information of the receive carrier, and determine a communication standard of the receive carrier based on standard information.

In a possible design, the first configuration information includes identification information of the at least two receive carriers, where the identification information of the receive carrier indicates a communication standard of the receive carrier.

Based on this possible design, the first communication apparatus may alternatively determine a receive carrier based on identification information of the receive carrier, and determine a communication standard of the receive carrier based on a frequency band of the receive carrier.

In a possible design, the first communication apparatus sends capability information of the first communication apparatus. The capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups. The cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

Based on this possible design, the first communication apparatus may report the capability information of the first communication apparatus to a second communication apparatus, so that the second communication apparatus configures at least two receive carriers for the first communication apparatus based on the capability information of the first communication apparatus. This enables the first communication apparatus to effectively support an inter-RAT communication mechanism, and increases a capacity of a communication system. In addition, this can improve spectral efficiency, and improve communication performance of the communication system.

In a possible design, the first communication apparatus obtains second configuration information, where the second configuration information includes one or more of the following information: configuration information of a control resource set corresponding to each of the at least two communication standards, and configuration information of a search space corresponding to each communication standard.

Based on this possible design, the first communication apparatus may detect control information based on the obtained second configuration information. This can reduce complexity of blind detection of the control information, effectively support an inter-RAT communication mechanism, and ensure quality of communication between the first communication apparatus and the second communication apparatus.

In a possible design, the first communication standard corresponds to a first control resource set, and the second communication standard corresponds to a second control resource set; or the first communication standard and the second communication standard correspond to a third control resource set, the first communication standard corresponds to a first search space of the third control resource set, and the second communication standard corresponds to a second search space of the third control resource set; or the first communication standard and the second communication standard correspond to a third search space.

Based on this possible design, different communication standards may correspond to different control resource sets, or may correspond to different search spaces of a same control resource set, or may correspond to different search spaces. This provides a plurality of feasible solutions for the second communication apparatus to configure a control resource set and a search space for the first communication apparatus.

In a possible design, the first communication apparatus detects control information corresponding to the second communication standard on the first receive carrier based on one or more of the following information corresponding to the first communication standard: a blind detection capability, a control resource set, and a search space, where the control information is control information used to schedule data transmission; or the first communication apparatus detects control information corresponding to the second communication standard on the first receive carrier based on one or more of the following information corresponding to the second communication standard: a blind detection capability, a control resource set, and a search space, where the control information is control information used to schedule data transmission; and the first communication apparatus parses the control information based on the second communication standard.

Based on this possible design, the first communication apparatus may detect the control information corresponding to the second communication standard on the first receive carrier based on the first communication standard, or may detect the control information corresponding to the second communication standard on the first receive carrier based on the second communication standard. This is not limited. In addition, the first communication apparatus parses, based on the second communication standard, the control information corresponding to the second communication standard. This can increase a detection success rate and a parsing success rate of the control information when the first communication apparatus effectively supports an inter-RAT communication mechanism, and can improve communication quality.

In a possible design, the first communication standard and the second communication standard correspond to a first control information format; the control information corresponds to the first control information format, the control information includes first indication information, and the first indication information indicates a communication standard; and the first communication apparatus parses the control information based on the communication standard indicated by the first indication information.

Based on this possible design, different communication standards correspond to a same control information format, so that a quantity of blind detections can be reduced, and an available PDCCH candidate location can be increased.

In a possible design, the first communication standard corresponds to a second control information format, and the second communication standard corresponds to a third control information format.

Based on this possible design, different communication standards may alternatively correspond to different control information formats, and a control information format may be flexibly designed based on different communication standards, to meet a transmission requirement and reduce control information overheads, so that the first communication apparatus determines, based on the control information format, that the detected control information is control information of a corresponding communication standard.

In a possible design, quantities of bits of control information corresponding to different communication standards are different.

Based on this possible design, quantities of bits of control information corresponding to different communication standards may be different, and a control information format may be flexibly designed based on different communication standards, to meet a transmission requirement and reduce control information overheads, so that the first communication apparatus determines, based on the quantities of bits of the control information, that the detected control information is control information of a corresponding communication standard.

In a possible design, the first communication apparatus obtains second indication information, where the second indication information indicates a timing offset between the at least two receive carriers, and the timing offset includes a symbol offset and/or a slot offset; and the first communication apparatus performs timing adjustment on the at least two receive carriers based on the second indication information.

In a possible design, that the first communication apparatus performs timing adjustment on the at least two receive carriers based on the second indication information includes: The first communication apparatus determines one or more of the following information based on the second indication information: hybrid automatic repeat request-acknowledgment HARQ-ACK timing, a cross-carrier data channel time domain location, a cross-carrier channel state information CSI triggering time domain location, and a cross-carrier channel sounding reference signal SRS triggering time domain location.

Based on the foregoing two possible designs, when there is a timing offset between the at least two receive carriers, the first communication apparatus may perform timing adjustment on one or more of the foregoing information based on the timing offset, so that the first communication apparatus determines an actual time domain location of the foregoing information. This improves communication accuracy, and further improves communication quality.

In a possible design, the first communication apparatus sends a blind detection capability, where the blind detection capability is a blind detection capability corresponding to each of at least two communication standards sup-

4

ported by the first communication apparatus.

Based on this possible design, the first communication apparatus may further send the blind detection capability to the second communication apparatus, so that the second communication apparatus determines, based on the blind detection capability, the blind detection capability corresponding to each communication standard supported by the first communication apparatus, and the second communication apparatus sends the control information to the first communication apparatus based on the blind detection capability corresponding to each communication standard supported by the first communication apparatus.

According to a second aspect, an embodiment of this application provides a first communication apparatus. The first communication apparatus may implement functions performed by the first communication apparatus in the first aspect or the possible designs of the first aspect, and the functions may be implemented by hardware by executing corresponding software. The hardware or the software includes one or more modules corresponding to the functions, for example, a transceiver unit and a processing unit. The transceiver unit is configured to obtain first configuration information; and the processing unit is configured to perform carrier aggregation communication on at least two receive carriers based on the first configuration information. The first configuration information indicates the first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

In a possible design, the first configuration information includes configuration information of at least two receive standard carrier groups, where the configuration information of the receive standard carrier group includes identification information of the receive standard carrier group and identification information of at least one receive carrier in the receive standard carrier group, and the identification information of the receive standard carrier group indicates a communication standard corresponding to the receive standard carrier group.

Based on this possible design, a multi-RAT receive carrier configuration may be implemented by configuring the configuration information of the receive standard carrier group, and a receive carrier is added to or deleted from the configuration information of the receive standard carrier group, to flexibly receive carrier configurations of a plurality of communication standards.

In a possible design, the first configuration information includes identification information of the at least two receive standard carrier groups and identification information of at least one receive carrier in the receive standard carrier group, where the identification information of the receive standard carrier group indicates a communication standard corresponding to the receive standard carrier group.

Based on this possible design, a multi-RAT receive carrier configuration may be implemented by configuring the identification information of the receive standard carrier group, and a communication standard of a receive carrier is added to or deleted from the identification information of the receive standard carrier group, to flexibly receive carrier configurations of a plurality of communication standards.

Based on the foregoing two possible designs, the first communication apparatus may determine a receive carrier based on identification information of a receive standard carrier group and identification information of the receive carrier in the first configuration information, and determine a communication standard of the receive carrier based on the identification information of the receive standard carrier group corresponding to the receive carrier.

In a possible design, the first configuration information includes identification information and standard information of the at least two receive carriers, where the standard information indicates a communication standard of a receive carrier corresponding to the identification information.

Based on this possible design, in this solution, a multi-RAT receive carrier configuration may be implemented by directly configuring a receive carrier, and a receive carrier is directly added to or deleted from the first configuration information, to flexibly receive carrier configurations of a plurality of communication standards.

In a possible design, the first configuration information includes identification information of the at least two receive carriers, where the identification information of the receive carrier indicates a communication standard of the receive carrier.

Based on this possible design, the first communication apparatus may alternatively determine a receive carrier based on identification information of the receive carrier, and determine a communication standard of the receive carrier based on a frequency band of the receive carrier.

In a possible design, the transceiver unit is further configured to send capability information of the first communication apparatus. The capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups. The cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

In a possible design, the transceiver unit is further configured to obtain second configuration information, where the second configuration information includes one or more of the following information: configuration information of a control resource set corresponding to each of the at least two communication standards, and configuration information of a search space corresponding to each communication standard.

In a possible design, the first communication standard corresponds to a first control resource set, and the second communication standard corresponds to a second control resource set; or the first communication standard and the second communication standard correspond to a third control resource set, the first communication standard corresponds to a first search space of the third control resource set, and the second communication standard corresponds to a second search space of the third control resource set; or the first communication standard and the second communication standard correspond to a third search space.

In a possible design, the processing unit is further configured to detect control information corresponding to the second communication standard on the first receive carrier based on one or more of the following information corresponding to the first communication standard: a blind detection capability, a control resource set, and a search space, where the control information is control information used to schedule data transmission; or the processing unit is further configured to detect control information corresponding to the second communication standard on the first receive carrier based on one or more of the following information corresponding to the second communication standard: a blind detection capability, a control resource set, and a search space, where the control information is control information used to schedule data transmission; and the processing unit is further configured to parse the control information based on the second communication standard.

In a possible design, the first communication standard and the second communication standard correspond to a first control information format; the control information corresponds to the first control information format, the control information includes first indication information, and the first indication information indicates a communication standard; and the processing unit is further configured to parse the control information based on the communication standard indicated by the first indication information.

In a possible design, the first communication standard corresponds to a second control information format, and the second communication standard corresponds to a third control information format.

In a possible design, quantities of bits of control information corresponding to different communication standards are different.

In a possible design, the transceiver unit is further configured to obtain second indication information, where the second indication information indicates a timing offset between the at least two receive carriers, and the timing offset includes a symbol offset and/or a slot offset; and the processing unit is further configured to perform timing adjustment on the at least two receive carriers based on the second indication information.

In a possible design, the processing unit is further configured to determine one or more of the following information based on the second indication information: hybrid automatic repeat request-acknowledgment HARQ-ACK timing, a cross-carrier data channel time domain location, a cross-carrier channel state information CSI triggering time domain location, and a cross-carrier channel sounding reference signal SRS triggering time domain location.

In a possible design, the transceiver unit is further configured to send a blind detection capability, where the blind detection capability is a blind detection capability corresponding to each of the at least two communication standards supported by the first communication apparatus.

It should be noted that, for a specific implementation of the first communication apparatus in the second aspect, refer to the behavior functions of the first communication apparatus in the communication method according to any one of the first aspect or the possible designs of the first aspect.

According to a third aspect, an embodiment of this application provides a first communication apparatus. The first communication apparatus may be a first communication apparatus, or may be a chip or a system-on-a-chip in the first communication apparatus. The first communication apparatus may implement functions performed by the first communication apparatus in the foregoing aspects or the possible designs, and the functions may be implemented by hardware. In a possible design, the first communication apparatus may include a transceiver and a processor. The transceiver and the processor may be configured to support the first communication apparatus in implementing the functions in any one of the first aspect or the possible designs of the first aspect. For example, the transceiver may be configured to obtain first configuration information; and the processor may be configured to perform carrier aggregation communication on at least two receive carriers based on the first configuration information. The first configuration information indicates the first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard. In another possible design, the first communication apparatus may further include a memory. The memory is configured to store computer-executable instructions and data that are necessary for the first communication apparatus. When the first communication apparatus runs, the transceiver and the processor execute the computer-executable instructions stored in the memory, so that the first communication apparatus performs the communication method according to any one of the first aspect or the possible designs of the first aspect.

For a specific implementation of the first communication apparatus in the third aspect, refer to the behavior functions of the first communication apparatus in the communication method according to any one of the first aspect or the possible designs of the first aspect.

According to a fourth aspect, an embodiment of this application provides a communication method. The method includes: A second communication apparatus sends first configuration information, and performs carrier aggregation communication on at least two receive carriers based on the first configuration information. The first configuration information indicates a first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

Based on the fourth aspect, the second communication apparatus sends the first configuration information to the first communication apparatus, so that the first communication apparatus can perform carrier aggregation communication on receive carriers of different communication standards based on the first configuration information. In addition, the second communication apparatus may also perform carrier aggregation communication on the receive carriers of different communication standards based on the first configuration information. This effectively supports an inter-RAT communication mechanism, and increases a capacity of a communication system. In addition, this can improve spectral efficiency, and improve communication performance of the communication system. This solution can implement inter-RAT receive carrier aggregation, implement flexible unified scheduling and transmission of a plurality of downlink communication standards, and improve downlink communication performance.

In a possible design, the first configuration information includes configuration information of at least two receive standard carrier groups, where the configuration information of the receive standard carrier group includes identification information of the receive standard carrier group and identification information of at least one receive carrier in the receive standard carrier group, and the identification information of the receive standard carrier group indicates a communication standard corresponding to the receive standard carrier group.

Based on this possible design, a multi-RAT receive carrier configuration may be implemented by configuring the configuration information of the receive standard carrier group, and a receive carrier is added to or deleted from the configuration information of the receive standard carrier group, to flexibly receive carrier configurations of a plurality of communication standards.

In a possible design, the first configuration information includes identification information of the at least two receive standard carrier groups and identification information of at least one receive carrier in the receive standard carrier group, where the identification information of the receive standard carrier group indicates a communication standard corresponding to the receive standard carrier group.

Based on this possible design, a multi-RAT receive carrier configuration may be implemented by configuring the identification information of the receive standard carrier group, and a communication standard of a receive carrier is added to or deleted from the identification information of the receive standard carrier group, to flexibly receive carrier configurations of a plurality of communication standards.

Based on the foregoing two possible designs, the first communication apparatus may determine a receive carrier based on identification information of a receive standard carrier group and identification information of the receive carrier in the first configuration information, and determine a communication standard of the receive carrier based on the identification information of the receive standard carrier group corresponding to the receive carrier.

In a possible design, the first configuration information includes identification information and standard information of the at least two receive carriers, where the standard information indicates a communication standard of a receive carrier corresponding to the identification information.

Based on this possible design, a multi-RAT receive carrier configuration may be implemented by directly configuring a receive carrier, and a receive carrier is directly added to or deleted from the first configuration information, to flexibly receive carrier configurations of a plurality of communication standards.

Based on this possible design, the first communication apparatus may determine a receive carrier based on identification information of the receive carrier, and determine a communication standard of the receive carrier based on standard information.

In a possible design, the first configuration information includes identification information of the at least two receive carriers, where the identification information of the receive carrier indicates a communication standard of the receive carrier.

Based on this possible design, the first communication apparatus may determine a receive carrier based on identification information of the receive carrier, and determine a communication standard of the receive carrier based on a frequency band of the receive carrier.

In a possible design, the second communication apparatus obtains capability information of the first communication apparatus. The capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups. The cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

Based on this possible design, the second communication apparatus obtains the capability information of the first communication apparatus, so that the second communication apparatus can configure at least two receive carriers for the first communication apparatus based on the capability information of the first communication apparatus. This enables the first communication apparatus to effectively support an inter-RAT communication mechanism, and increases a capacity of a communication system. In addition, this can improve spectral efficiency, and improve communication performance of the communication system.

In a possible design, the second communication apparatus sends second configuration information, where the second configuration information includes one or more of the following information: configuration information of a control resource set corresponding to each of the at least two communication standards, and configuration information of a search space corresponding to each communication standard.

Based on this possible design, the second communication apparatus sends the second configuration information, so that the first communication apparatus can detect control information based on the obtained second configuration information. This can reduce complexity of blind detection of the control information, effectively support an inter-RAT communication mechanism, and ensure quality of communication between the first communication apparatus and the second communication apparatus.

In a possible design, the first communication standard corresponds to a first control resource set, and the second communication standard corresponds to a second control resource set; or the first communication standard and the second communication standard correspond to a third control resource set, the first communication standard corresponds to a first search space of the third control resource set, and the second communication standard corresponds to a second search space of the third control resource set; or the first communication standard and the second communication standard correspond to a third search space.

Based on this possible design, different communication standards may correspond to different control resource sets, or may correspond to different search spaces of a same control resource set, or may correspond to different search spaces. This provides a plurality of feasible solutions for the second communication apparatus to configure a control resource set and a search space for the first communication apparatus.

In a possible design, the second communication apparatus sends control information corresponding to the second communication standard on the first receive carrier based on one or more of the following information corresponding to the first communication standard: a blind detection capability, a control resource set, and a search space, where the control information is control information used to schedule data transmission; or the second communication apparatus sends control information corresponding to the second communication standard on the first receive carrier based on one or more of the following information corresponding to the second communication standard: a blind detection capability, a control resource set, and a search space, where the control information is control information used to schedule data transmission.

Based on this possible design, the second communication apparatus may send the control information corresponding to the second communication standard on the first receive carrier based on the first communication standard, or may send the control information corresponding to the second communication standard on the first receive carrier based on the second communication standard. This is not limited.

In a possible design, the first communication standard and the second communication standard correspond to a first control information format; and the second communication apparatus sends the control information, where the control information corresponds to the first control information format, the control information includes first indication information, and the first indication information indicates a communication standard.

Based on this possible design, different communication standards correspond to a same control information format, so that a quantity of blind detections can be reduced, and an available PDCCH candidate location can be increased.

In a possible design, the first communication standard corresponds to a second control information format, and the second communication standard corresponds to a third control information format.

Based on this possible design, different communication standards may alternatively correspond to different control information formats, and a control information format may be flexibly designed based on different communication standards, to meet a transmission requirement and reduce control information overheads, so that the first communication apparatus determines, based on the control information format, that the detected control information is control information of a corresponding communication standard.

In a possible design, quantities of bits of control information corresponding to different communication standards are different.

Based on this possible design, quantities of bits of control information corresponding to different communication standards may be different, and a control information format may be flexibly designed based on different communication standards, to meet a transmission requirement and reduce control information overheads, so that the first communication apparatus determines, based on the quantities of bits of the control information, that the detected control information is control information of a corresponding communication standard.

In a possible design, the second communication apparatus sends second indication information, where the second indication information indicates a timing offset between the at least two receive carriers, and the timing offset includes a symbol offset and/or a slot offset.

Based on this possible design, when there is a timing offset between the at least two receive carriers, the second communication apparatus indicates the timing offset to the first communication apparatus, so that the first communication apparatus can perform timing adjustment based on the timing offset. This improves communication accuracy, and further improves communication quality.

In a possible design, the second communication apparatus obtains a blind detection capability, where the blind detection capability is a blind detection capability corresponding to each of the at least two communication standards supported by the first communication apparatus.

Based on this possible design, the second communication apparatus may determine, based on the obtained blind detection capability, the blind detection capability corresponding to each communication standard supported by the first communication apparatus, so that the second communication apparatus sends the control information to the first communication apparatus based on the blind detection capability corresponding to each communication standard supported by the first communication apparatus.

According to a fifth aspect, an embodiment of this application provides a second communication apparatus. The second communication apparatus may implement functions performed by the second communication apparatus in the fourth aspect or the possible designs of the fourth aspect, and the functions may be implemented by hardware by executing corresponding software. The hardware or the software includes one or more modules corresponding to the functions, for example, a transceiver unit and a processing unit. The transceiver unit is configured to send first configuration information; and the processing unit is configured to perform carrier aggregation communication on at least two receive carriers based on the first configuration information. The first configuration information indicates a first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

In a possible design, the first configuration information includes configuration information of at least two receive standard carrier groups, where the configuration information of the receive standard carrier group includes identification information of the receive standard carrier group and identification information of at least one receive carrier in the receive standard carrier group, and the identification information of the receive standard carrier group indicates a communication standard corresponding to the receive standard carrier group.

In a possible design, the first configuration information includes identification information of the at least two receive standard carrier groups and identification information of at least one receive carrier in the receive standard carrier group, where the identification information of the receive standard carrier group indicates a communication standard corresponding to the receive standard carrier group.

In a possible design, the first configuration information includes identification information and standard information of the at least two receive carriers, where the standard information indicates a communication standard of a receive carrier corresponding to the identification information.

In a possible design, the first configuration information includes identification information of the at least two receive carriers, where the identification information of the receive carrier indicates a communication standard of the receive carrier.

In a possible design, the transceiver unit is further configured to obtain capability information of the first communication apparatus. The capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups. The cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

In a possible design, the transceiver unit is further configured to send second configuration information, where the second configuration information includes one or more of the following information: configuration information of a control resource set corresponding to each of the at least two communication standards, and configuration information of a search space corresponding to each communication standard.

In a possible design, the first communication standard corresponds to a first control resource set, and the second communication standard corresponds to a second control resource set; or the first communication standard and the second communication standard correspond to a third control resource set, the first communication standard corresponds to a first search space of the third control resource set, and the second communication standard corresponds to a second search space of the third control resource set; or the first communication standard and the second communication standard correspond to a third search space.

In a possible design, the transceiver unit is further configured to send control information corresponding to the second communication standard on the first receive carrier based on one or more of the following information corresponding to the first communication standard: a blind detection capability, a control resource set, and a search space, where the control information is control information used to schedule data transmission; or the transceiver unit is further configured to send control information corresponding to the second communication standard on the first receive carrier based on one or more of the following information corresponding to the second communication standard: a blind detection capability, a control resource set, and a search space, where the control information is control information used to schedule data transmission.

In a possible design, the first communication standard and the second communication standard correspond to a first control information format; and the second communication apparatus sends the control information, where the control information corresponds to the first control information format, the control information includes first indication information, and the first indication information indicates a communication standard.

In a possible design, the first communication standard corresponds to a second control information format, and the second communication standard corresponds to a third control information format.

In a possible design, quantities of bits of control information corresponding to different communication standards are different.

In a possible design, the transceiver unit is further configured to send second indication information, where the second indication information indicates a timing offset between the at least two receive carriers, and the timing offset includes a symbol offset and/or a slot offset.

In a possible design, the transceiver unit is further configured to obtain a blind detection capability, where the blind detection capability is a blind detection capability corresponding to each of the at least two communication standards supported by the first communication apparatus.

It should be noted that, for a specific implementation of the second communication apparatus in the fifth aspect, refer to the behavior functions of the second communication apparatus in the communication method according to any one of the fourth aspect or the possible designs of the fourth aspect.

According to a sixth aspect, an embodiment of this application provides a second communication apparatus. The second communication apparatus may be a second communication apparatus, or may be a chip or a system-on-a-chip in the second communication apparatus. The second communication apparatus may implement functions performed by the second communication apparatus in the foregoing aspects or the possible designs, and the functions may be implemented by hardware. In a possible design, the second communication apparatus may include a transceiver and a processor. The transceiver and the processor may be configured to support the second communication apparatus in implementing the functions in any one of the fourth aspect or the possible designs of the fourth aspect. For example, the transceiver may be configured to send first configuration information; and the processor may be configured to perform carrier aggregation communication on at least two receive carriers based on the first configuration information. The first configuration information indicates a first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard. In another possible design, the second communication apparatus may further include a memory. The memory is configured to store computer-executable instructions and data that are necessary for the second communication apparatus. When the second communication apparatus runs, the transceiver and the processor execute the computer-executable instructions stored in the memory, so that the second communication apparatus performs the communication method according to any one of the fourth aspect or the possible designs of the fourth aspect.

For a specific implementation of the second communication apparatus in the sixth aspect, refer to the behavior functions of the second communication apparatus in the communication method according to any one of the fourth aspect or the possible designs of the fourth aspect.

According to a seventh aspect, a communication apparatus is provided. The communication apparatus includes one or more processors. The one or more processors are configured to run a computer program or instructions. When the one or more processors execute the computer instructions or the instructions, the communication apparatus is enabled to perform the communication method according to any one of the first aspect or the possible designs of the first aspect or the communication method according to any one of the fourth aspect or the possible designs of the fourth aspect.

In a possible design, the communication apparatus further includes one or more memories. The one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component, that is, the processor and the memory may alternatively be integrated together. In a possible implementation, the communication apparatus further includes a transceiver. The transceiver is configured to receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to an eighth aspect, a communication apparatus is provided. The communication apparatus includes an input/output interface and a logic circuit. The input/output interface is configured to input and/or output information. The logic circuit is configured to: perform the communication method according to any one of the first aspect or the possible designs of the first aspect or the communication method according to any one of the fourth aspect or the possible designs of the fourth aspect, and perform processing based on the information and/or generate information. The information includes first configuration information, the first configuration information indicates a first communication apparatus to perform carrier aggregation communication on at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

According to a ninth aspect, a computer-readable storage medium is provided. The computer-readable storage medium stores computer instructions or a program; and when the computer instructions or the program is run on a computer, the computer is enabled to perform the communication method according to any one of the first aspect or the possible designs of the first aspect or the communication method according to any one of the fourth aspect or the possible designs of the fourth aspect.

According to a tenth aspect, a computer program product including computer instructions is provided. When the computer program product runs on a computer, the computer is enabled to perform the communication method according to any one of the first aspect or the possible designs of the first aspect or the communication method according to any one of the fourth aspect or the possible designs of the fourth aspect.

According to an eleventh aspect, an embodiment of this application provides a computer program. When the computer program is run on a computer, the computer is enabled to perform the communication method according to any one of the first aspect or the possible designs of the first aspect or the communication method according to any one of the fourth aspect or the possible designs of the fourth aspect.

For technical effects brought by any design manner of the seventh aspect to the eleventh aspect, refer to the technical effects brought by any possible design of the first aspect, or refer to the technical effects brought by any possible design of the fourth aspect. Details are not described again.

According to a twelfth aspect, a communication system is provided. The communication system includes the first communication apparatus according to any one of the second aspect and the third aspect and the second communication apparatus according to any one of the fifth aspect and the sixth aspect.

## BRIEF DESCRIPTION OF DRAWINGS

FIG. 1 is a schematic diagram of a CA architecture and a DC architecture according to an embodiment of this application;

FIG. 2 is a schematic diagram of a scheduling policy according to an embodiment of this application;

FIG. 3 is a schematic diagram of SRS switching according to an embodiment of this application;

FIG. 4 is a schematic diagram of a communication system according to an embodiment of this application;

FIG. 5 is a schematic diagram of a protocol stack according to an embodiment of this application;

FIG. 6 is a schematic diagram of a communication system according to an embodiment of this application;

FIG. 7 is a diagram of a composition structure of a communication apparatus according to an embodiment of this application;

FIG. 8 is a flowchart of a communication method according to an embodiment of this application;

FIG. 9 is a flowchart of a communication method according to an embodiment of this application;

FIG. 10 is a flowchart of a communication method according to an embodiment of this application;

FIG. 11 is a schematic diagram of a timing offset according to an embodiment of this application;

FIG. 12 is a schematic diagram of a timing offset according to an embodiment of this application;

FIG. 13 is a schematic diagram of a timing offset according to an embodiment of this application;

FIG. 14 is a flowchart of a communication method according to an embodiment of this application;

FIG. 15 is a flowchart of a communication method according to an embodiment of this application;

FIG. 16 is a schematic diagram of cross-carrier scheduling in a same standard carrier group according to an embodiment of this application;

FIG. 17 is a schematic diagram of cross-carrier scheduling between different standard carrier groups according to an embodiment of this application;

FIG. 18 is a flowchart of a communication method according to an embodiment of this application;

FIG. 19 is a flowchart of a communication method according to an embodiment of this application;

FIG. 20 is a schematic diagram of composition of a first communication apparatus according to an embodiment of this application;

FIG. 21 is a schematic diagram of composition of a second communication apparatus according to an embodiment of this application; and

FIG. 22 is a schematic diagram of composition of a communication apparatus according to an embodiment of this application.

## DESCRIPTION OF EMBODIMENTS

Before embodiments of this application are described, technical terms used in the embodiments of this application are described.

A radio access technology (radio access technology, RAT) of a fourth generation (4th generation, 4G) communication system may be referred to as long term evolution (long term evolution, LTE). LTE is long term evolution of a universal mobile telecommunications system (universal mobile telecommunications system, UMTS) technical standard formulated by the 3rd generation partnership project (3rd generation partnership project, 3GPP) organization; and a network device of LTE may be referred to as an enhanced NodeB (enhanced nodeB, eNB).

A radio access technology of a fifth generation (5th generation, 5G) communication system may be referred to as a new radio access technology (new radio access technology in 3GPP, NR), or may be referred to as 5G-NR for short; and a network device of NR may be referred to as a next generation NodeB (NR NodeB, gNB).

For a future communication system (for example, a sixth generation (6th generation, 6G) communication system), a radio access technology may be a future radio access technology or the like.

Communication standard: The communication standard may be 2G, 3G, 4G, 5G, 6G, a future communication standard, or the like. 2G may also be described as a global system for mobile communications (global system for mobile communications, GSM), 3G may also be described as code division multiple access (code division multiple access, CDMA), 4G may also be described as LTE, and 5G may also be described as NR. It should be noted that the communication standard may also be described as a network standard, or described as a mobile phone/terminal standard. This is not limited.

Carrier aggregation (carrier aggregation, CA): The carrier aggregation is a technology of aggregating a plurality of component carriers (component carrier, CC) to achieve a large transmission bandwidth and increase uplink and downlink transmission rates. The carrier aggregation may include intra-band contiguous carrier aggregation, intra-band non-contiguous carrier aggregation, and inter-band non-contiguous carrier aggregation.

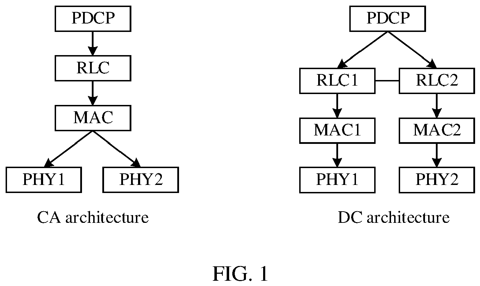

For example, as shown in FIG. 1, a CA architecture may include a packet data convergence protocol (packet data convergence protocol, PDCP) layer, a radio link control (radio link control, RLC) layer, a media access control (media access control, MAC) layer, and a physical (physical, PHY) layer. CA may aggregate data at the MAC layer to implement joint scheduling.

Specifically, a terminal device or a network device may determine, based on a capability of the terminal device or the network device, a maximum quantity of carriers that can be simultaneously used for uplink and downlink transmission. The terminal device or the network device may aggregate a plurality of carriers into a wider spectrum based on CA, and may also aggregate some discontinuous spectrum fragments together, so that a requirement for spectrum compatibility of a communication system can be well met, a standardization process can be accelerated, and an existing communication apparatus and spectrum resources can also be used to a maximum extent. A most intuitive advantage of the carrier aggregation is that a transmission speed is greatly increased and a delay is reduced. In addition, the carrier aggregation can further efficiently improve network quality, increase a throughput, and balance network load, especially in a heavy-load scenario.

For example, when the terminal device accesses a 4G network, the network device may configure a 4G carrier for the terminal device; and when the terminal device accesses a 5G network, the network device may configure a 5G carrier for the terminal device. The CA may include one primary component carrier or primary cell (primary cell, PCell) and one or more secondary component carriers or secondary cells (secondary cell, SCell).

The CA may support one or more of the following configurations: a centralized scheduler, cross-carrier scheduling (cross-carrier scheduling), a search space, a physical downlink control channel (physical downlink control channel, PDCCH) blind detection capability, sounding reference signal (sounding reference signal, SRS) switching, a joint uplink control information feedback (joint uplink control information feedback, joint UCI feedback), and uplink power control.

For the centralized scheduler, CA can implement dynamic multiple-input multiple-output (multiple-input multiple-output, MIMO) layer quantity sharing and symbol-level dynamic power sharing between a plurality of carriers and can implement joint resource configuration optimization.

The cross-carrier scheduling is relative to self-scheduling, and the self-scheduling means sending scheduling information of a carrier 1 on the carrier 1 and sending scheduling information of a carrier 2 on the carrier 2. The cross-carrier scheduling means that the scheduling information of the carrier 1 can be sent on the carrier 2. The scheduling may include uplink data scheduling and/or downlink data scheduling.

In this application, uplink may be sending, and downlink may be receiving.

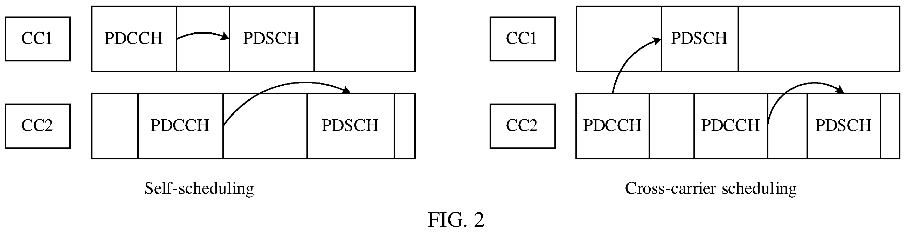

For example, as shown in FIG. 2, for self-scheduling, a PDCCH may be sent on CC1 to schedule a physical downlink shared channel (physical downlink shared channel, PDSCH) of CC1, and a PDCCH may be sent on CC2 to schedule a PDSCH of CC2; and for cross-carrier scheduling, the PDCCH may be sent on CC2 to schedule the PDSCH of CC1.

The network device may configure cross-carrier scheduling configuration information for the terminal device by using radio resource control (radio resource control, RRC) signaling, where the cross-carrier scheduling configuration information may indicate self-scheduling (own) or cross-carrier scheduling (other). When the cross-carrier scheduling configuration information indicates cross-carrier scheduling, the cross-carrier scheduling configuration information may further include a scheduling cell identifier (scheduling cell ID) and a carrier indicator field in scheduling cell (carrier indicator field in scheduling cell, CIF-in scheduling cell). The terminal device may perform cross-carrier scheduling in a scheduling cell indicated by the scheduling cell identifier. The network device may further send downlink control information (downlink control information, DCI) including a 3-bit CIF to the terminal device, and the terminal device may balance DCI load through cross-carrier scheduling, thereby flexibly coordinating resources and improving spectral efficiency.

For the search space, the network device may configure a control channel resource set (control channel resource set, CORESET) and a search space (search space, SS) for the terminal device. For a search space set, the terminal device may detect a PDCCH candidate. One PDCCH candidate may include one or more control channel elements (control channel element, CCE). An aggregation level L of the PDCCH candidate may indicate that the PDCCH candidate includes L CCEs. A value of L may be 1, 2, 4, 8, 16, 32, or the like.

For cross-carrier scheduling in CA, when calculating a CCE number included in the PDCCH candidate, the terminal device may determine the CCE number of the PDCCH candidate of the carrier based on a CIF value.

For the PDCCH blind detection capability, the PDCCH blind detection capability of the terminal device may include one or more of the following: a maximum quantity of PDCCH candidates of the terminal device for blind detection in one slot, a maximum quantity of non-overlapping CCEs of the terminal device for blind detection in one slot, a maximum quantity of PDCCH candidates of the terminal device for blind detection in one combination (X, Y), and a maximum quantity of non-overlapping CCEs of the terminal device for blind detection in one combination (X, Y).

For example, the combination (X, Y) may be a combination such as (2, 2), (4, 3), or (7, 3), where X may indicate that each span set includes X symbols, and an interval of any span set is within Y symbols. The combination may also be referred to as a span pattern (span pattern). Symbols of each combination do not overlap.

For example, for a single cell, corresponding to different subcarrier spacings (subcarrier spacing, SCS), a maximum quantity of PDCCH candidates for blind detection in one slot is shown in Table 1, and a maximum quantity of non-overlapping CCEs for blind detection in one slot is shown in Table 2, where $\mu$ represents a subcarrier spacing of $2^{\mu} \cdot 15$ kHz.

Table 1

| μ | Maximum quantity of PDCCH candidates for blind detection in one slot |
|---|---|
| 0 | 44 |
| 1 | 36 |
| 2 | 22 |
| 3 | 20 |

Table 2

| μ | Maximum quantity of non-overlapping CCEs for blind detection in one slot |
|---|---|
| 0 | 56 |
| 1 | 56 |
| 2 | 48 |
| 3 | 32 |

For another example, for a single cell, corresponding to different subcarrier spacings (subcarrier spacing, SCS), a maximum quantity of PDCCH candidates for blind detection in one combination (X, Y) is shown in Table 3, and a maximum quantity of non-overlapping CCEs for blind detection in one combination (X, Y) is shown in Table 4, where μ represents a subcarrier spacing of $2^\mu \cdot 15$ kHz.

Table 3

|  | Maximum quantity of PDCCH candidates for blind detection in (X, Y) | | |
|---|---|---|---|
| μ | (2, 2) | (4, 3) | (7,3) |
| 0 | 14 | 28 | 44 |
| 1 | 12 | 24 | 36 |

Table 4

|  | Maximum quantity of non-overlapping CCEs for blind detection in (X, Y) | | |
|---|---|---|---|
| μ | (2, 2) | (4, 3) | (7,3) |
| 0 | 18 | 36 | 56 |
| 1 | 18 | 36 | 56 |

For the SRS switching (SRS switching), a time division duplex (time division duplex, TDD) asymmetric CA scenario is used as an example. It is assumed that there are more downlink carriers than uplink carriers. To optimize downlink scheduling, an SRS needs to be scheduled on a secondary component carrier (secondary component carrier, SCC) (SRS on a PUSCH-less carrier, that is, there is no physical uplink shared channel (physical uplink shared channel, PUSCH) on the SCC). By sending the SRS, the network device may obtain downlink channel information, to perform downlink transmission more efficiently. When a terminal capability is limited to sending an uplink signal only in one cell at a moment, the SRS switching is also required. The SRS switching can improve downlink transmission performance.

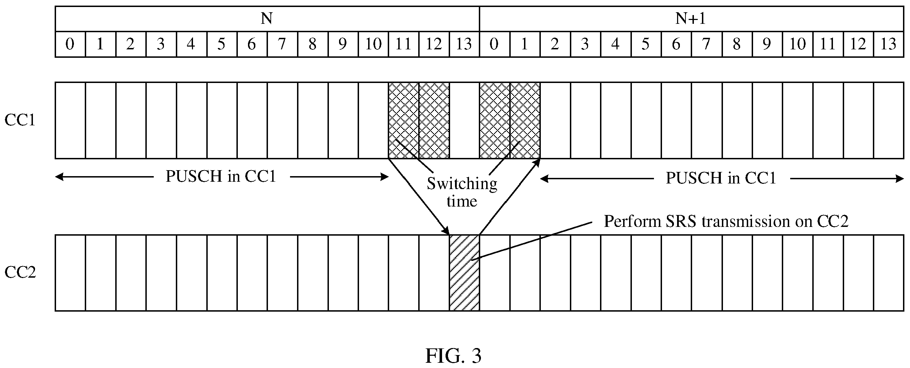

For example, as shown in FIG. 3, the terminal device may perform PUSCH scheduling on the 0th symbol to the 10th symbol in the Nth slot of CC1, perform SRS transmission on CC2 after a switching time including the 11th symbol and the 12th symbol in the Nth slot, and perform PUSCH scheduling on the 2nd symbol to the 13th symbol in the (N+1)th slot of CC1 after a switching time including the 0th symbol and the 1st symbol in the (N+1)th slot.

For the joint uplink control information feedback, the terminal device may jointly encode PDSCH acknowledgement (acknowledgement, ACK)/negative acknowledgement (negative acknowledgement, NACK) information of a plurality of carriers and/or channel state information (channel state information, CSI) of the plurality of carriers to perform feedback on one carrier. The joint uplink control information feedback can reduce uplink feedback overhead resources, improve spectral efficiency, and improve uplink transmission performance.

For the uplink power control, symbol-level dynamic power sharing can be implemented between different carriers in the CA. The terminal device may determine a transmit power on each symbol based on a priority. A high-priority channel on a high-priority carrier may be preferentially transmitted on each symbol. For priorities of carriers, a priority of a primary component carrier may be higher than a priority of a secondary component carrier, and a smaller cell index (index) indicates a higher priority. Channel priorities in descending order may be as follows: a physical random access channel (physical random access channel, PRACH) of a primary cell, a physical uplink control channel (physical uplink control channel, PUCCH)/PUSCH with a high-priority identifier (where in a case of a same priority identifier, a PUCCH with a HARQ-ACK, a PUCCH with CSI), an SRS (an aperiodic SRS, a semi-static SRS, or a periodic SRS), or a PRACH in a non-PCell.

Dual connectivity (dual connectivity, DC): The DC is an important technology introduced in 3GPP Release-12. With the dual connectivity technology, an LTE macro station and a small cell can use existing non-ideal backhaul (non-ideal backhaul) X2 interfaces to implement carrier aggregation, to provide higher rates for users, and perform macro/micro networking to improve spectral efficiency and balance load. A terminal device supporting dual connectivity can be simultaneously connected to two LTE base stations, thereby increasing a single-user throughput. During 5G network deployment, a 5G cell may serve as a macro for coverage of independent networking or a small cell for coverage and capacity enhancement of an existing LTE network. Regardless of a networking manner, the dual connectivity technology can be used to implement interconnection between an LTE system and a 5G system, to improve radio resource utilization of an entire mobile network system, reduce a communication system handover delay, and improve user and system performance.

For example, as shown in FIG. 1, a DC architecture may include a PDCP layer, an RLC layer, a MAC layer, and a PHY layer. DC may perform data aggregation at the PDCP layer.

Specifically, for the DC, the network device may configure two cell groups for the terminal device: a master cell group (master cell group, MCG) and a secondary cell group (secondary cell group, SCG). A primary cell in the master cell group is a PCell, and a primary cell in the secondary cell group is a primary secondary cell (PSCell, primary secondary cell). In the DC, a primary station and a secondary station interact only at the RLC layer. Therefore, an independent scheduler is used at the MAC layer. A CA feature is separately implemented in two cell groups. The MCG and SCG do not interact with each other.

It should be noted that the MCG and the SCG are concepts in the DC, and a cell group including a cell in which the terminal device first initiates random access (random access channel, RACH) may be determined as the MCG. If there is no DC, there are no MCG and SCG concepts. Alternatively, it may be understood that, if there is no DC, the cell group may be considered as the MCG.

The MCG and the SCG may be of a same communication standard, or may be of different communication standards.

For example, when both the MCG and the SCG are NR, DC may be referred to as NR-DC; when the MCG is LTE and the SCG is NR, DC may be referred to as EN-DC; and when the MCG is NR and the SCG is LTE, DC may be referred to as NE-DC.

DC may support one or more of the following configurations: MIMO layer quantity allocation, power allocation, and a PDCCH blind detection capability.

For the MIMO layer quantity allocation, a MIMO layer quantity can be semi-statically allocated in advance in the DC. For example, in an example in which the terminal device supports four layers of MIMO, a maximum layer quantity of the MCG may be 2, and a maximum layer quantity of the SCG may be 2. However, it should be noted that, even if the SCG or the MCG has no data to transmit, the MCG or the SCG supports a maximum of two layers. Consequently, flexible dynamic allocation cannot be implemented, and performance is limited.

For the power allocation, EN-DC and NE-DC support slot-level power sharing, and NR-DC supports two slot-level power sharing modes: semi-static power sharing and dynamic power sharing.

For the slot-level power sharing supported by EN-DC and NE-DC, for the MCG, the network device may configure maximum transmit power P_MCG for the terminal device; and for the SCG, the network device may configure maximum transmit power P_SCG for the terminal device. If P1'+P2' is greater than the maximum transmit power of the terminal device in an overlapping slot, power of the MCG or the SCG may be reduced based on a priority (for example, LTE transmission is preferentially ensured, that is, an LTE priority is greater than a 5G priority), and it is ensured that P1' cannot be greater than P_MCG and P2' cannot be greater than P_SCG. Herein, P1' is power that needs to be transmitted by the MCG in the slot, and P2' is power that needs to be transmitted by the SCG in the slot.

For the slot-level semi-static power sharing supported by NR-DC, the network device may configure P_MCG and P_SCG for the terminal device, where P_MCG+P_SCG<P_total, and P_total is the maximum transmit power of the terminal device. In a possible design, when the MCG and the SCG have time-domain overlapping in a slot, in the overlapping slot, transmit power of the MCG is less than or equal to P_MCG, and transmit power of the SCG is less than or equal to P_SCG. If there is no overlapping in the slot, the maximum power depends on a communication transmission requirement, that is, configured P_MCG and P_SCG may not be considered. In another possible design, regardless of whether time-domain overlapping occurs in a slot, transmit power of the MCG is less than or equal to P_MCG, and transmit power of the SCG is less than or equal to P_SCG.

For the slot-level dynamic power sharing supported by NR-DC, the network device may configure P_MCG and P_SCG for the terminal device. In a possible design, when the MCG and the SCG have time-domain overlapping in a slot, in the overlapping slot, transmit power of the MCG is less than or equal to P_MCG, and transmit power of the SCG is less than or equal to P_SCG. If there is no overlapping in the slot, the maximum power depends on a communication transmission requirement, that is, configured P_MCG and P_SCG may not be considered. In another possible design, if the terminal device has a look-head mechanism, the terminal device may determine whether overlapping exists in a slot. In this case, the terminal device may preferentially transmit power of the MCG, where power of the SCG is min{P_SCG, P_total-transmit power of the MCG}.

For the PDCCH blind detection capability, when DC is NR-DC, PDCCH blind detection capabilities of the MCG and the SCG may be separately reported. The network device may separately configure a quantity of PDCCH blind detections for the MCG and the SCG, and ensure that a sum of the two is less than a reporting capability of the terminal device. When DC is EN-DC/NE-DC, the MCG and the SCG are completely independent of each other.

In a communication system, some carriers support only LTE, and some carriers support only NR. To further increase a communication capacity of the communication system, an inter-radio access technology (inter-radio access technology, inter-RAT) communication mechanism (or may be described as a multi-RAT (multi-RAT, MR) communication mechanism) is proposed. However, CA supports carrier aggregation only on carriers of a same communication standard. To be specific, when performing carrier aggregation, the terminal device or the network device can perform carrier aggregation communication only based on carriers of a same communication standard. In addition, in DC, an inter-RAT communication mechanism may be supported at the MCG and the SCG through coordination between the MCG and the SCG. However, an independent scheduler is used in DC. Consequently, flexible coordination between different RAT carriers cannot be implemented, and spectral efficiency is reduced. In other words, CA and DC cannot well support the inter-RAT communication mechanism. Consequently, the capacity of the communication system is limited, and communication performance of the communication system is affected.

To resolve this problem, an embodiment of this application provides a communication method. A first communication apparatus may obtain first configuration information, and perform carrier aggregation communication on at least two receive carriers based on the first configuration information. The first configuration information may indicate the first communication apparatus to perform carrier aggregation communication on the at least two receive carriers, the at least two receive carriers include a first receive carrier and a second receive carrier, the first receive carrier corresponds to a first communication standard, the second receive carrier corresponds to a second communication standard, and the first communication standard is different from the second communication standard. In this embodiment of this application, the first communication apparatus may perform carrier aggregation communication on receive carriers of different communication standards based on the first configuration information. This can effectively support an inter-RAT communication mechanism, and increase a capacity of a communication system. In addition, this can improve spectral efficiency, and improve communication performance of the communication system.

The following describes implementations of embodiments of this application in detail with reference to the accompanying drawings in this specification.

The communication method provided in an embodiment of this application may be applied to any communication system. The communication system may be a third generation partnership project (third generation partnership project, 3GPP) communication system, for example, an LTE system; or may be an NR system or an NR V2X system in 5G; or may be a system in hybrid networking of LTE and 5G, a device-to-device (device-to-device, D2D) communication system, a machine-to-machine (machine-to-machine, M2M) communication system, the internet of things (Internet of Things, IoT), a frequency division duplex (frequency division duplex, FDD) system, a time division duplex (time division duplex, TDD) system, a satellite communication system, or another next-generation communication system (for example, a 6G system); or may be a non-3GPP communication system. This is not limited.

The communication method provided in this embodiment of this application may be applied to various communication scenarios. For example, the communication method may be applied to one or more of the following communication scenarios: an enhanced mobile broadband (enhanced mobile broadband, eMBB), ultra-reliable and low latency communications (ultra-reliable low latency communications, URLLC), machine type communication (machine type communication, MTC), the internet of things (internet of things, IoT), the narrowband internet of things (narrowband internet of thing, NB-IoT), customer premise equipment (customer premise equipment, CPE), augmented reality (augmented reality, AR), virtual reality (virtual reality, VR), massive machine type communications (massive machine type communications, mMTC), device-to-device (device-to-device, D2D), vehicle-to-everything (vehicle-to-everything, V2X), vehicle-to-vehicle (vehicle-to-vehicle, V2V), and the like.

This embodiment of this application is applicable to both a homogeneous network scenario and a heterogeneous network scenario, and is not limited to a transmission point. Coordinated multipoint transmission may be performed between macro base stations, between micro base stations, and between a macro base station and a micro base station. The embodiment of this application is applicable to a frequency division multiplexing system, a time division multiplexing system, a duplex system, an access and backhaul system, a relay system, and the like. This embodiment of this application is applicable to a low-frequency scenario (sub 6G), and is also applicable to a high-frequency scenario (above 6G), terahertz, optical communication, and the like. This is not limited.

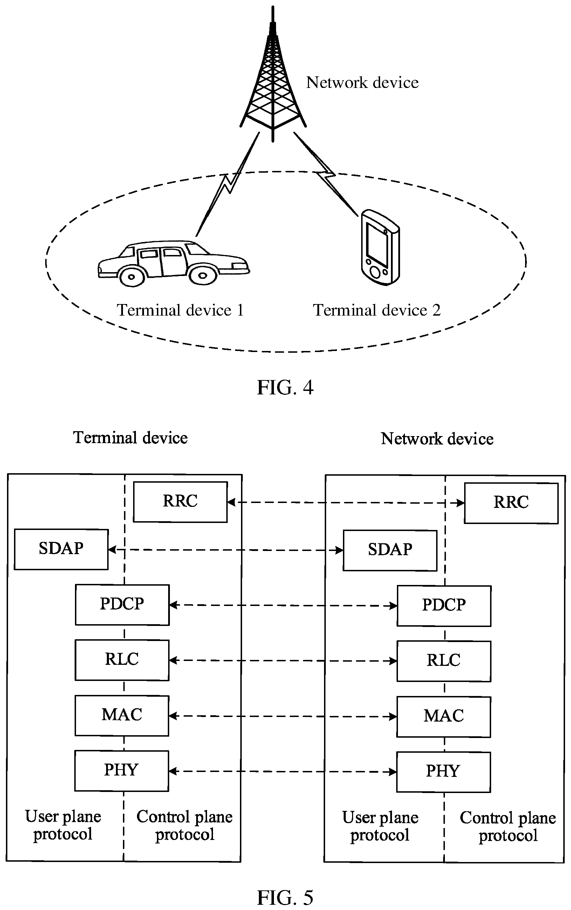

The following uses FIG. 4 as an example to describe a communication method provided in an embodiment of this application.

FIG. 4 is a schematic diagram of a communication system according to an embodiment of this application. As shown in FIG. 4, the communication system may include a terminal device and a network device.

The terminal device in FIG. 4 may be located in cell coverage of the network device. The terminal device may communicate with the network device through an air interface by using an uplink (uplink, UL) or a downlink (downlink, DL). In a UL direction, the terminal device may send data to the network device through a PUSCH. In a DL direction, the network device may send a PDCCH carrying DCI to the terminal device, or may send data to the terminal through a PDSCH.

The terminal device may also perform sidelink communication or D2D communication with another terminal device by using a sidelink (sidelink, SL), and send data to the another terminal device on the SL. For example, the terminal device sends sidelink data to the another terminal device on the SL through a physical sidelink shared channel (physical sidelink shared channel, PSSCH), and sends sidelink feedback control information (sidelink feedback control information, SFCI) corresponding to received sidelink data to the another terminal device on the SL through a physical sidelink feedback channel (physical sidelink feedback channel, PSFCH). The D2D communication may include vehicle-to-vehicle communication, vehicle-to-pedestrian communication, vehicle-to-infrastructure communication, unmanned aerial vehicle (unmanned aerial vehicle, UAV) to unmanned aerial vehicle communication, and the like. This is not limited. It should be noted that, in this embodiment of this application, the SL may also be referred to as a direct link, a PC5 interface link, or the like. This is not limited. The sidelink may also be referred to as a bylink.

Specifically, as shown in FIG. 5, the terminal device may include a PHY layer, a MAC layer, an RLC layer, a PDCP layer, a service data adaptation protocol (service data adaptation protocol, SDAP) layer, and an RRC layer. The terminal device may include a user plane (user plane) protocol and a control plane (control plane) protocol.

For example, the terminal device in FIG. 4 may be referred to as a terminal (terminal), user equipment (user equipment, UE), a mobile station (mobile station, MS), a mobile terminal (mobile terminal, MT), or the like, and may be a device that provides voice and/or data connectivity for a user. Specifically, the terminal device in FIG. 4 may be a mobile phone (mobile phone), an unmanned aerial vehicle, a tablet computer, a computer having a wireless transceiver function, a handheld device having a wireless connection function, a vehicle-mounted device, or the like. Alternatively, the terminal device may be a palmtop computer, a mobile internet device (mobile internet device, MID), a wearable device, an eMBB terminal, a URLLC terminal, an MTC terminal, an NB-IoT terminal, a CPE terminal, a VR terminal, an AR terminal, a V2X terminal, a wireless terminal in industrial control, a wireless terminal in self-driving, a wireless terminal in remote medical, a wireless terminal in a smart grid, a wireless terminal in transportation security, a wireless terminal in a smart city (smart city), a wireless terminal in a smart home (smart home), a sensor, a cellular phone, a cordless phone, a session initiation protocol (session initiation protocol, SIP) phone, a wireless local loop (wireless local loop, WLL) station, a personal digital assistant (personal digital assistant, PDA), a computing device, another processing device connected to a wireless modem, a vehicle-mounted terminal, a vehicle having a vehicle-to-vehicle (vehicle-to-vehicle, V2V) capability, an unmanned aerial vehicle (unmanned aerial vehicle, UAV) having a unmanned aerial vehicle to unmanned aerial vehicle communication capability, a terminal device in a 5G network, a terminal device in a future evolved public land mobile network (public land mobile network, PLMN), or the like. This is not limited.

It should be noted that the terminal device and the user may be completely independent of each other. For example, all information related to the user may be stored in a smart card (SIM), and the card may be used on the terminal device.

The network device in FIG. 4 may be any device having a radio transceiver function, and may be configured to be responsible for functions related to an air interface, for example, a radio link maintenance function, a radio resource management function, and some mobility management functions. The radio link maintenance function is used to maintain a radio link between terminal devices, and is responsible for protocol conversion between radio link data and internet protocol (internet protocol, IP) data. The radio resource management function may include functions such as radio link establishment and release, and radio resource scheduling and allocation. The some mobility management functions may include configuring the terminal device to perform measurement, evaluating radio link quality of the terminal device, determining inter-cell handover of the terminal device, and the like.

Specifically, FIG. 5 is a schematic diagram of a protocol stack of the network device. The protocol stack of the network device may include a PHY layer, a MAC layer, an RLC layer, a PDCP layer, an SDAP layer, and an RRC layer. The protocol stack of the network device also includes a user plane protocol and a control plane protocol, and the layers of the terminal device and the network device may be connected to each other for information transmission.

For example, the network device may be a device that supports wired access, or may be a device that supports wireless access. For example, the network device may be an access network (access network, AN)/radio access network (radio access network, RAN) device, and includes a plurality of AN/RAN nodes. The AN/RAN node may be a continuously evolved NodeB (gNB), a transmission reception point (transmission reception point, TRP), an evolved NodeB (evolved NodeB, eNB), a radio network controller (radio network controller, RNC), a home NodeB (for example, a home evolved NodeB or a home NodeB, HNB), a wireless fidelity (wireless fidelity, Wi-Fi) access point (access point, AP), a wireless relay node, a wireless backhaul node, a transmission point (transmission point, TP) or a transmission reception point (transmission reception point, TRP), or the like; or may be a gNB in a 5G system such as an NR system, a transmission point (TRP or TP), or one antenna panel or a group of antenna panels of a base station in the 5G system; or may be a network node that constitutes a gNB or a transmission point, for example, a baseband unit (baseband unit, BBU), a distributed unit (distributed unit, DU), D2D, V2X, a device that bears a base station function in machine-to-machine (machine-to-machine, M2M) communication, a 6G base station, a base station in a future communication system, or the like.

The network device may serve a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

It should be noted that the terminal device and the network device in embodiments of this application each may be one or more chips, a system-on-a-chip (system-on-a-chip, SOC), or the like. FIG. 4 is merely an example of the accompanying drawing, and a quantity of devices included in FIG. 4 is not limited. Names of the devices and the links in FIG. 4 are not limited. In addition to the names shown in FIG. 4, the devices and the links may be further named with other names. For example, the terminal device communicates with the network device through a user equipment (user equipment, Uu) interface, and the UL may alternatively be named as a Uu link. This is not limited.

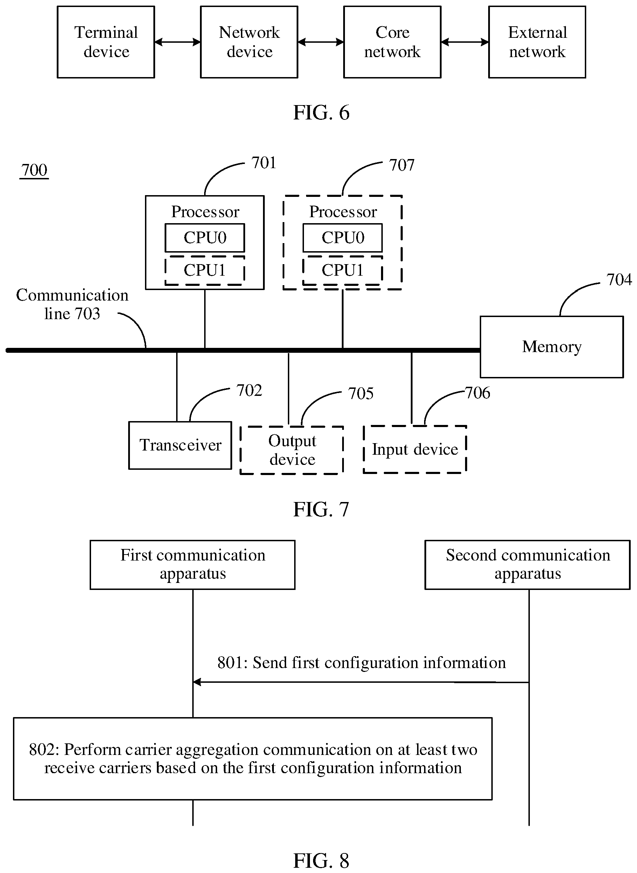

In addition, in addition to the devices shown in FIG. 4, as shown in FIG. 6, the communication system may further include a core network and an external network.

For example, a mobile network may be divided into three parts: a base station subsystem, a network subsystem, and a system support part. The network device may be located in the base station subsystem, and the core network may be located in the network subsystem.

Specifically, the core network may be used to transmit a call request or a data request from an air interface to different external networks. The core network may be used as an interface provided by a bearer network for the external network, and may provide functions such as user connection, user management, and bearer connection.

For example, user connection establishment may include functions such as mobility management (mobility management, MM), call management (call management, CM), switching/routing, and recording notification. The user management may include functions such as user description, quality of service (quality of service, QoS), user communication recording (accounting), a virtual home environment (virtual home environment, VHE) (for example, providing a virtual home environment through a dialog with an intelligent network platform), and security (for example, an authentication center provides corresponding security measures, including security management for a mobile service and security processing for external network access). The bearer connection (access to) includes functions such as an external public switched telephone network (public switched telephone network, PSTN), an external circuit data network and packet data network, the internet (internet) and intranet (intranet), and a mobile short message service (short message service, SMS) server. Basic services provided by the core network may include mobile office, e-commerce, communication, entertainment, travel and location-based services, telemetry (telemetry)-simple message transfer services (monitoring and control), and the like.

As a core part of the communication system, the core network may play a role of connection, and is mainly responsible for processing mobility management, session management, and data transmission (core functions) of the terminal device. Based on an evolved packet core (evolved packet core, EPC), a 5G core network has three new enhancements: a service-based architecture, network slicing, and separation of a control plane and a user plane. Compared with a 4G core network, the 5G core network evolves to a separated architecture. 1. Network function separation: The network function separation absorbs a cloud-native design idea of network functions virtualization (network functions virtualization, NFV) and builds a network in a software-based, modular, and service-oriented manner. 2. Separation of the control plane and the user plane: A user plane function is not restricted by "centralization", and can be flexibly deployed on both the core network and the access network.

The external network may be an operator network that provides a data transmission service for a user, for example, may be an operator network that provides an IP multimedia service (IP multimedia service, IMS) for the user. An application server may be deployed in the DN, and the application server may provide a data transmission service for the user. Specifically, the operator may include a PLMN. The PLMN is a network established and operated by a government or an operator approved by the government to provide a land mobile communication service for the public. For example, the operator may be a mobile operator, a unicom operator, or a telecommunications operator.

During specific implementation, as shown in FIG. 4, for example, each terminal device and the network device each may use a composition structure shown in FIG. 7, or include components shown in FIG. 7. FIG. 7 is a schematic diagram of composition of a communication apparatus 700 according to an embodiment of this application. The communication apparatus 700 may be a terminal device, or a chip or a system-on-a-chip in the terminal device; or may be a network device, or a chip or a system-on-a-chip in the network device. As shown in FIG. 7, the communication apparatus 700 includes a processor 701, a transceiver 702, and a communication line 703.

The communication apparatus 700 may further include a memory 704. The processor 701, the memory 704, and the transceiver 702 may be connected through the communication line 703.

The processor 701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 701 may be another apparatus having a processing function, for example, a circuit, a component, or a software module. This is not limited.

The transceiver 702 is configured to communicate with another device or another communication network. The another communication network may be the Ethernet, a radio access network (radio access network, RAN), a wireless local area network (wireless local area network, WLAN), or the like. The transceiver 702 may be a module, a circuit, a transceiver, or any apparatus that can implement communication.

The communication line 703 is configured to transmit information between the components included in the communication apparatus 700.

The memory 704 is configured to store instructions. The instructions may be a computer program.

The memory 704 may be a read-only memory (read-only memory, ROM) or another type of static storage device that can store static information and/or instructions; or may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 704 may be independent of the processor 701, or may be integrated with the processor 701. The memory 704 may be configured to store instructions, program code, some data, or the like. The memory 704 may be located inside the communication apparatus 700, or may be located outside the communication apparatus 700. This is not limited. The processor 701 is configured to execute the instructions stored in the memory 704, to implement a communication method provided in the following embodiments of this application.

In an example, the processor 701 may include one or more CPUs, for example, CPU0 and CPU1 in FIG. 7.

In an optional implementation, the communication apparatus 700 may include a plurality of processors. For example, in addition to the processor 701 in FIG. 7, the communication apparatus 700 may further include a processor 707.

In an optional implementation, the communication apparatus 700 further includes an output device 705 and an input device 706. For example, the input device 706 is a device such as a keyboard, a mouse, a microphone, or a joystick, and the output device 705 is a device such as a display or a speaker (speaker).

It should be noted that the communication apparatus 700 may be a desktop computer, a portable computer, a network server, a mobile phone, a tablet computer, a wireless terminal, an embedded device, a chip system, or a device having a structure similar to the structure in FIG. 7. In addition, the composition structure shown in FIG. 8 does not constitute a limitation on the communication apparatus. In addition to the components shown in FIG. 7, the communication apparatus may include more or fewer components than those shown in the figure, or may combine some components, or may have different component arrangements.

In embodiments of this application, the chip system may include a chip, or may include a chip and another discrete component.

In addition, for actions, terms, and the like in embodiments of this application, refer to each other. This is not limited. In embodiments of this application, names of messages exchanged between devices, names of parameters in the messages, or the like are merely examples. Other names may alternatively be used during specific implementation. This is not limited.

The communication method shown in embodiments of this application may be applied to communication between a first communication apparatus and a second communication apparatus. The first communication apparatus may be a terminal device. The second communication apparatus may be a terminal device or a network device. It should be noted that the communication method shown in embodiments of this application may be applied to communication between a terminal device and a network device, or may be applied to communication between terminal devices.

The following describes the communication method provided in embodiments of this application with reference to the communication system shown in FIG. 4. The first communication apparatus may be any terminal device in the communication system, and the second communication apparatus may be any network device in the communication system or any terminal device other than the first communication apparatus. The first communication apparatus and the second communication apparatus in the following embodiments each may have the components shown in FIG. 7.

FIG. 8 is a flowchart of a communication method according to an embodiment of this application. As shown in FIG. 8, the method may include the following steps.

Step 801: A second communication apparatus sends first configuration information. Correspondingly, a first communication apparatus obtains the first configuration information.

Step 802: The first communication apparatus performs carrier aggregation communication on at least two receive carriers based on the first configuration information.

The first configuration information may indicate the first communication apparatus to perform carrier aggregation communication on the at least two receive carriers. The at least two receive carriers may correspond to at least two communication standards. The receive carrier may also be described as a cell.

For example, the at least two communication standards may be at least two of the following communication standards: 2G (or described as GSM), 3G (or described as CDMA), 4G (or described as LTE), 5G (or described as NR), 6G, and a future communication standard.

In an example, the at least two receive carriers include a first receive carrier and a second receive carrier. The first receive carrier may correspond to a first communication standard, and the second receive carrier may correspond to a second communication standard. The first communication standard is different from the second communication standard.

In another example, the at least two receive carriers include a first receive carrier, a second receive carrier, and a third receive carrier. The first receive carrier may correspond to a first communication standard, the second receive carrier may correspond to a second communication standard, and the third receive carrier may also correspond to the second communication standard. The first communication standard is different from the second communication standard.

In still another example, the at least two receive carriers include a first receive carrier, a second receive carrier, and a third receive carrier. The first receive carrier may correspond to a first communication standard, the second receive carrier may correspond to a second communication standard, and the third receive carrier may correspond to a third communication standard. The first communication standard is different from the second communication standard and is also different from the third communication standard, and the second communication standard is also different from the third communication standard.

Optionally, the at least two receive carriers include one primary receive carrier and one or more secondary receive carriers.

The primary receive carrier may be a receive carrier that is used when the first communication apparatus accesses a network.

For example, the at least two receive carriers include a receive carrier whose communication standard is LTE, a receive carrier whose communication standard is NR, and a receive carrier whose communication standard is 6G. The primary receive carrier may be the receive carrier whose communication standard is LTE, and the secondary receive carrier may be the receive carrier whose communication standard is NR and/or the receive carrier whose communication standard is 6G. Alternatively, the primary receive carrier may be the receive carrier whose communication standard is NR, and the secondary receive carrier may be the receive carrier whose communication standard is LTE and/or the receive carrier whose communication standard is 6G. Alternatively, the primary receive carrier may be the receive carrier whose communication standard is 6G, and the secondary receive carrier may be the receive carrier whose communication standard is LTE and/or the receive carrier whose communication standard is NR.

In a first possible design, the first configuration information includes configuration information of at least two receive standard carrier groups.

The configuration information of the receive standard carrier group (RAT-carrier group) may include identification information (RAT-carrier group index) of the receive standard carrier group and identification information (carrier index) of at least one receive carrier in the receive standard carrier group.

The identification information of the receive standard carrier group may indicate a communication standard corresponding to the receive standard carrier group. The receive standard carrier group may also be described as a standard cell group (RAT-cell group).

Specifically, the second communication apparatus may configure the at least two receive standard carrier groups for the first communication apparatus. The receive standard carrier group includes at least one receive carrier, different receive standard carrier groups correspond to different communication standards, and receive carriers in a same receive standard carrier group have a same communication standard.

For example, the identification information of the receive standard carrier groups is 0, 1, and 2. The receive standard carrier group 0 may include at least one receive carrier whose communication standard is the first communication standard, the receive standard carrier group 1 may include at least one receive carrier whose communication standard is the second communication standard, and the receive standard carrier group 2 may include at least one receive carrier whose communication standard is the third communication standard.

For example, the receive standard carrier group 0 may include at least one receive carrier whose communication standard is LTE, the receive standard carrier group 1 may include at least one receive carrier whose communication standard is NR, and the receive standard carrier group 2 may include at least one receive carrier whose communication standard is 6G.

It should be noted that the identification information of the receive carrier may be identification information of the receive carrier in the receive standard carrier group. In other words, receive carriers in different receive standard carrier groups may have same identification information. Alternatively, the identification information of the receive carrier is globally unique. In other words, receive carriers in different receive standard carrier groups have different identification information.

Optionally, when the second communication apparatus adds and/or deletes a secondary receive carrier for the first communication apparatus, the second communication apparatus indicates identification information of the secondary receive carrier and identification information of a receive standard carrier group corresponding to the secondary receive carrier to the first communication device, and the first communication apparatus determines a communication standard of the secondary receive carrier based on the identification information of the receive standard carrier group corresponding to the secondary receive carrier.

Optionally, the second communication apparatus adds and/or deletes a secondary receive carrier in the configuration information of the receive standard carrier groups configured for the first communication apparatus, and the first communication apparatus determines, based on the configuration information of the receive standard carrier groups configured by the second communication apparatus, a communication standard of a receive carrier configured by the second communication apparatus for the first communication apparatus.

Optionally, when the second communication apparatus sends DCI to the first communication apparatus to schedule data, the second communication apparatus adds, to a CIF for indication to the first communication apparatus, the identification information of the receive standard carrier groups and/or the identification information of the receive carriers that are/is indicated in the configuration information of the receive standard carrier groups in the first configuration information.

For example, the CIF may indicate only the identification information of the receive carriers, and the first communication apparatus determines a receive carrier for communication based on the identification information of the receive carriers that is indicated by the CIF.

For example, the CIF may indicate only the identification information of the receive standard carrier groups. When one receive standard carrier group includes one receive carrier, the first communication apparatus may determine a receive carrier for communication based on the identification information of the receive standard carrier groups that is indicated by the CIF.

For example, the CIF may indicate the identification information of the receive carriers and the identification information of the receive standard carrier groups, and the first communication apparatus may determine a receive carrier for communication based on the identification information of the receive carriers and the identification information of the receive standard carrier groups that are indicated by the CIF.

The identification information of the receive standard carrier groups and the identification information of the receive carriers may occupy one information field of the CIF, or may occupy two information fields of the CIF. In other words, the identification information of the receive standard carrier groups occupies one information field of the CIF, and the identification information of the receive carriers occupies the other information field of the CIF. This is not limited.

In a second possible design, the first configuration information includes identification information of at least two receive standard carrier groups and identification information of at least one receive carrier in the receive standard carrier group.

A difference from the first possible design in which the first configuration information includes the configuration information of the at least two receive standard carrier groups and the configuration information of the receive standard carrier group includes the identification information of the receive standard carrier group and the identification information of the at least one receive carrier in the receive standard carrier group is that the second communication apparatus may also directly add the identification information of the at least two receive standard carrier groups and the identification information of the at least one receive carrier in the receive standard carrier group to the first configuration information.

It should be noted that, for descriptions of the identification information of the at least two receive standard carrier groups and the identification information of the at least one receive carrier in the receive standard carrier group in the second possible design, refer to the specific descriptions of the identification information of the at least two receive standard carrier groups and the identification information of the at least one receive carrier in the receive standard carrier group in the first possible design. Details are not described again.

In a third possible design, the first configuration information includes identification information and standard information of the at least two receive carriers.

The identification information of the receive carrier may indicate the receive carrier, and the standard information of the receive carrier may indicate a communication standard of the receive carrier. It should be noted that the identification information of the receive carrier may be globally unique. In other words, different receive carriers have different identification information.

Optionally, when the second communication apparatus adds and/or deletes a secondary receive carrier for the first communication apparatus, the second communication apparatus indicates identification information of the secondary receive carrier and standard information of the secondary receive carrier to the first communication apparatus.

Optionally, when the second communication apparatus sends DCI to the first communication apparatus to schedule data, the second communication apparatus adds, to a CIF for indication to the first communication apparatus, the identification information and/or the standard information of the receive carriers that are/is indicated in the first configuration information.

For example, the CIF may indicate only the identification information of the receive carriers, and the first communication apparatus determines a receive carrier for communication based on the identification information of the receive carriers that is indicated by the CIF.

For example, the CIF may indicate only the standard information of the receive carriers. When one communication standard corresponds to one receive carrier, the first communication apparatus may determine a receive carrier for communication based on the standard information indicated by the CIF.

For example, the CIF may indicate the identification information of the receive carriers and the standard information of the receive carriers, and the first communication apparatus may determine a receive carrier for communication based on the identification information and the standard information of the receive carriers that are indicated by the CIF.

The identification information of the receive carriers and the standard information of the receive carriers may occupy one information field of the CIF, or may occupy two information fields of the CIF. In other words, the identification information of the receive carriers occupies one information field of the CIF, and the standard information of the receive carriers occupies the other information field of the CIF. This is not limited.

In a fourth possible design, the first configuration information includes identification information of the at least two receive carriers.

The identification information of the receive carrier may indicate a communication standard of the receive carrier. It should be noted that the identification information of the receive carrier may be globally unique. In other words, different receive carriers have different identification information.

For example, the first communication apparatus may determine a receive carrier based on identification information of the receive carrier, and determine a communication standard of the receive carrier based on a frequency band of the receive carrier.

It should be noted that the first possible design to the fourth possible design may alternatively be used in combination. To be specific, the second communication apparatus may determine the first configuration information and send the first configuration information to the first communication apparatus based on one or more of the first possible design to the fourth possible design.

For example, the second communication apparatus sends the first configuration information to the first communication apparatus based on the first possible design and the third possible design. It is assumed that the at least two receive carriers include at least one receive carrier corresponding to the first communication standard and at least one receive carrier corresponding to the second communication standard. The second communication apparatus may determine, based on the first possible design, first configuration information corresponding to the at least one receive carrier corresponding to the first communication standard, determine, based on the third possible design, first configuration information corresponding to the at least one receive carrier corresponding to the second communication standard, and send the first configuration information to the first communication apparatus.

For example, the second communication apparatus may determine, based on the first possible design, identification information of at least one receive carrier that corresponds to NR and that is configured for the first communication apparatus and identification information of a receive standard carrier group corresponding to the receive carrier; determine, based on the third possible design, identification information and standard information of at least one receive carrier that corresponds to 6G and that is configured for the first communication apparatus; add the identification information of the at least one receive carrier corresponding to NR, the identification information of the receive standard carrier group corresponding to the receive carrier, and the identification information and the standard information of the at least one receive carrier corresponding to 6G to the first configuration information; and send the first configuration information to the first communication apparatus.

Further, similar to that the first communication apparatus performs carrier aggregation communication on the at least two receive carriers based on the first configuration information, the second communication apparatus may also perform carrier aggregation communication on the at least two receive carriers based on the first configuration information. Details are not described again.

It should be noted that, that the first communication apparatus performs carrier aggregation communication on the at least two receive carriers may also be described as that the first communication apparatus performs receive carrier aggregation communication on the at least two receive carriers; or when the second communication apparatus is a network device, that the first communication apparatus performs carrier aggregation communication on the at least two receive carriers may be described as that the first communication apparatus performs downlink carrier aggregation communication on the at least two receive carriers.

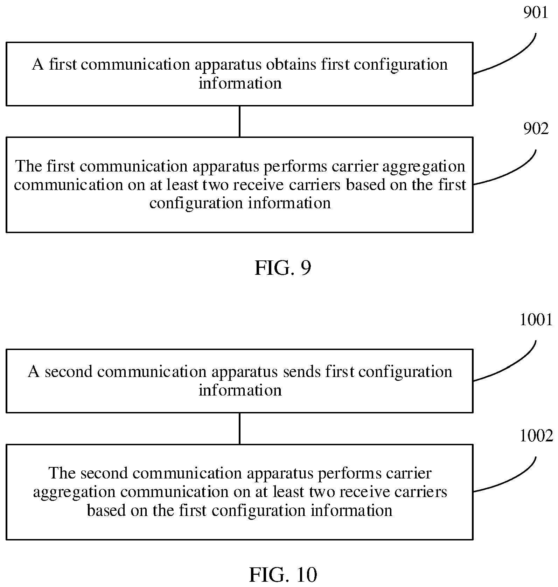

Based on the method shown in FIG. 8, alternatively, as shown in FIG. 9, a communication method provided in an embodiment of this application may be described from the perspective of the first communication apparatus.

FIG. 9 is a flowchart of the communication method according to this embodiment of this application. As shown in FIG. 9, the method may include the following steps.

Step 901: The first communication apparatus obtains first configuration information.

Specifically, for specific descriptions of obtaining the first configuration information by the first communication apparatus, refer to the related descriptions of obtaining the first configuration information by the first communication apparatus in step 801. Details are not described again.

Step 902: The first communication apparatus performs carrier aggregation communication on at least two receive carriers based on the first configuration information.

Specifically, for specific descriptions of performing, by the first communication apparatus, carrier aggregation communication on the at least two receive carriers based on the first configuration information, refer to the related descriptions of performing, by the first communication apparatus, carrier aggregation communication on the at least two receive carriers based on the first configuration information in step 802. Details are not described again.

Based on the methods shown in FIG. 8 and FIG. 9, alternatively, as shown in FIG. 10, a communication method provided in an embodiment of this application may be described from the perspective of the second communication apparatus.

FIG. 10 is a flowchart of the communication method according to this embodiment of this application. As shown in FIG. 10, the method may include the following steps.

Step 1001: The second communication apparatus sends first configuration information.

Specifically, for specific descriptions of sending the first configuration information by the second communication apparatus, refer to the related descriptions of sending the first configuration information by the second communication apparatus in step 801. Details are not described again.

FIG. 10 may further include step 1002.

Step 1002: The second communication apparatus performs carrier aggregation communication on at least two receive carriers based on the first configuration information.

Specifically, for specific descriptions of performing, by the second communication apparatus, carrier aggregation communication on the at least two receive carriers based on the first configuration information, refer to the related descriptions of performing, by the first communication apparatus, carrier aggregation communication on the at least two receive carriers based on the first configuration information in step 802. Details are not described again.

This embodiment of this application may be an independent embodiment, or may be combined with another embodiment of this application. Specifically, this is not limited in this application.

Based on the methods shown in FIG. 8 to FIG. 10, the first communication apparatus and the second communication apparatus may perform carrier aggregation communication on receive carriers of different communication standards based on the first configuration information. This can effectively support an inter-RAT communication mechanism, and increase a capacity of a communication system. In addition, this can improve spectral efficiency, and improve communication performance of the communication system.

Based on the methods shown in FIG. 8 to FIG. 10, the second communication apparatus may further configure at least two transmit carriers for the first communication apparatus, and the first communication apparatus may perform carrier aggregation communication based on the at least two transmit carriers. For descriptions of the at least two transmit carriers, refer to the descriptions of the at least two receive carriers. Details are not described again.

In an example, the second communication apparatus may send third configuration information to the first communication apparatus. The third configuration information may indicate the first communication apparatus to perform carrier aggregation communication on the at least two transmit carriers, the at least two transmit carriers include a first transmit carrier and a second transmit carrier, the first transmit carrier corresponds to a first communication standard, and the second transmit carrier corresponds to a second communication standard.

In another example, the second communication apparatus may also indicate at least two carriers to the first communication apparatus by using the first configuration information, that is, the second communication apparatus sends the first configuration information to the first communication apparatus. The first configuration information may indicate the first communication apparatus to perform carrier aggregation communication on the at least two carriers, the at least two carriers include a first carrier and a second carrier, the first carrier corresponds to a first communication standard, and the second carrier corresponds to a second communication standard.

In the another example, the carrier may be a transmit carrier, or may be a receive carrier.

For example, the first carrier may be a transmit carrier, and the second carrier may be a receive carrier; or the first carrier is both a transmit carrier and a receive carrier, and the second carrier is both a transmit carrier and a receive carrier.

The second communication apparatus may further send second indication information to the first communication apparatus, and the first communication apparatus may perform timing adjustment on the at least two receive carriers based on the second indication information.

The second indication information may indicate a timing offset between the at least two receive carriers.

The timing offset may be a timing offset between two receive carriers of a same communication standard in the at least two receive carriers, or may be a timing offset between two receive carriers of different communication standards.

The timing offset may be a timing offset between receive carriers with a same subcarrier spacing, or may be a timing offset between receive carriers with different subcarrier spacings.

For example, the timing offset may include a symbol offset and/or a slot offset.

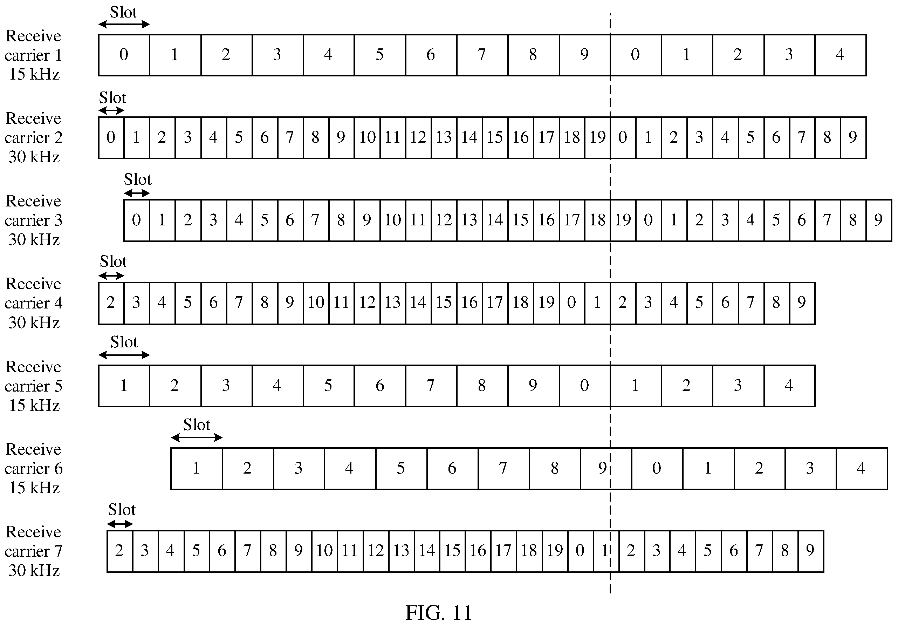

Optionally, a timing offset quantity may be based on an offset carrier subcarrier spacing, or may be based on a reference carrier subcarrier spacing. The following example is based on the offset carrier subcarrier spacing. For example, as shown in FIG. 11, compared with a receive carrier 1, a receive carrier 2 is frame-synchronized and is also slot-boundary-synchronized, and there is no slot number offset or a slot number offset is 0, that is, a timing offset is 0; for a receive carrier 3, slot boundaries are aligned, there is a slot number offset, and the offset may be -1 (for example, a right offset is negative, and a left offset is positive, and vice versa), that is, a timing offset is 1 slots; for a receive carrier 4, slot boundaries are aligned, there is a slot number offset, and the offset may be +2, that is, a timing offset is +2 slots; for a receive carrier 5, slot boundaries are aligned, there is a slot number offset, and the offset may be +1, that is, a timing offset is +1 slots; and for a receive carrier 6 and a receive carrier 7, slot boundaries are not aligned.

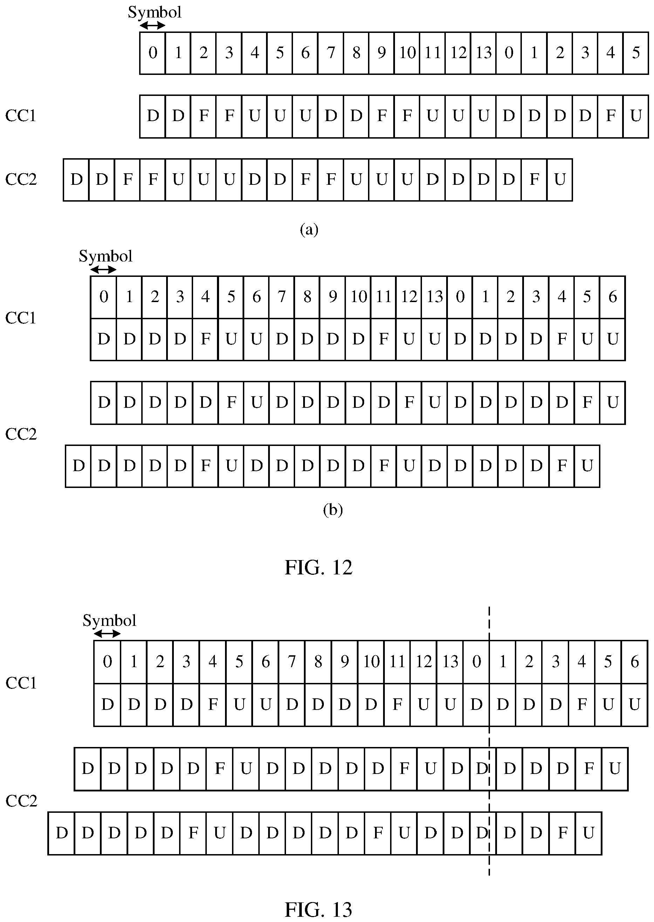

For another example, when slot boundaries are not aligned but symbol boundaries are aligned, as shown in (a) in FIG. 12, for CC1, there is no symbol number offset or a symbol number offset is 0, that is, a timing offset is 0; and for CC2, there is a symbol number offset, and the offset may be -3, that is, a timing offset is -3 symbols. As shown in (b) in FIG. 12, for CC1, there is no symbol number offset or a symbol number offset is 0, that is, a timing offset is 0; in a first case of CC2, there is no symbol number offset or a symbol number offset is 0, that is, a timing offset is 0; and in a second case of CC2, there is a symbol number offset, and the offset may be -1, that is, a timing offset is -1 symbols.

For another example, when slot boundaries are not aligned and symbol boundaries are not aligned, as shown in FIG. 13, compared with CC1, CC2 has a symbol offset in both a first case and a second case.

When there are a relatively small quantity of uplink resources, the symbol offset may increase moments at which an available uplink resource exists. This can improve uplink performance and reduce a transmission delay. When there are a plurality of operators, the symbol offset may also implement uplink and downlink alignment. This avoids or reduces uplink and downlink interference and improves performance.

For example, when performing timing adjustment on the at least two receive carriers based on the second indication information, the first communication apparatus may determine one or more of the following information based on the second indication information: hybrid automatic repeat request-acknowledgment (hybrid automatic repeat request-acknowledgment, HARQ-ACK) timing, a cross-carrier data channel time domain location, a cross-carrier CSI triggering time domain location, and a cross-carrier SRS triggering time domain location.

For example, the first communication apparatus may add or subtract a timing offset based on a time domain location of HARQ-ACK timing that is specified by the second communication apparatus, to obtain a time domain location of the HARQ-ACK timing; add or subtract a timing offset based on a cross-carrier data channel time domain location specified by the second communication apparatus, to obtain the cross-carrier data channel time domain location; and add or subtract a timing offset based on a cross-carrier CSI triggering time domain location specified by the second communication apparatus, to obtain the cross-carrier CSI triggering time domain location; and add or subtract a timing offset based on a cross-carrier SRS triggering time domain location specified by the second communication apparatus, to obtain the cross-carrier SRS triggering time domain location.

Based on the foregoing descriptions of the timing offset between the at least two receive carriers, when the second communication apparatus configures the at least two transmit carriers for the first communication apparatus, the second communication apparatus may also indicate the timing offset between the at least two transmit carriers to the first communication apparatus, so that the first communication apparatus performs timing adjustment based on the timing offset between the at least two transmit carriers.

For descriptions of the timing offset between the at least two transmit carriers, refer to the foregoing descriptions of the timing offset between the at least two receive carriers. Details are not described again.

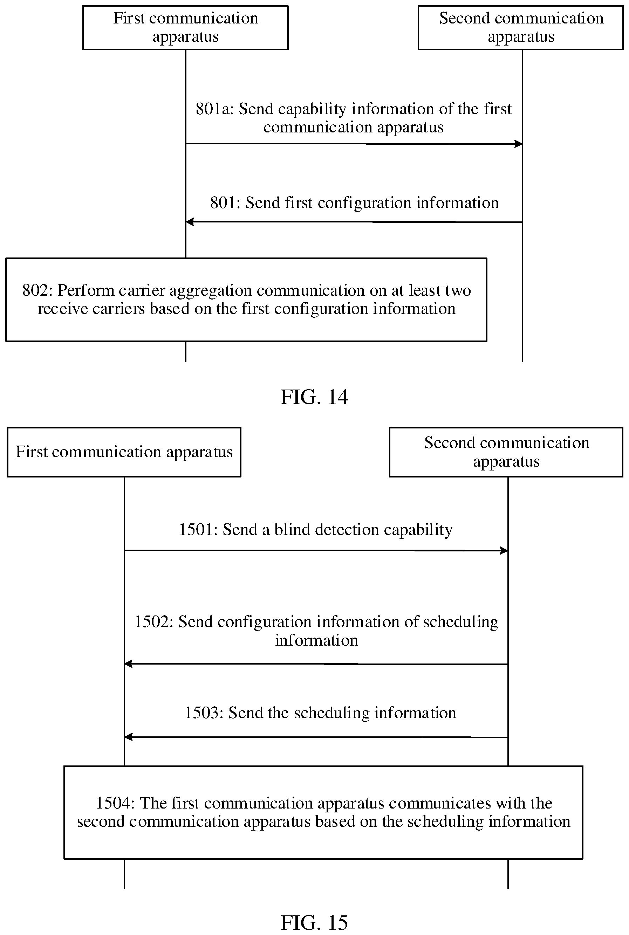

Based on the methods shown in FIG. 8 to FIG. 13, as shown in FIG. 14, the first communication apparatus may further perform step 801a. It should be noted that whether step 801a is performed before step 801 is not limited. This embodiment of this application may be used in combination with the foregoing embodiment, or may be independent of the foregoing embodiment. This is not limited.

Step 801a: The first communication apparatus sends capability information of the first communication apparatus. Correspondingly, the second communication apparatus receives the capability information of the first communication apparatus.

The capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same standard carrier group, and a capability indicating that the first communication apparatus supports cross-carrier scheduling between different standard carrier groups.

The carrier may be a transmit carrier, or may be a receive carrier.

When the carrier is a receive carrier, the cross-carrier scheduling in a same standard carrier group may also be described as cross-carrier scheduling in a same receive standard carrier group, and the cross-carrier scheduling between different standard carrier groups may also be described as cross-carrier scheduling between different receive standard carrier groups.

When the carrier is a transmit carrier, the cross-carrier scheduling in a same standard carrier group may also be described as cross-carrier scheduling in a same transmit standard carrier group, and the cross-carrier scheduling between different standard carrier groups may also be described as cross-carrier scheduling between different transmit standard carrier groups.

The cross-carrier scheduling in a same standard carrier group may mean that a standard of a scheduling carrier is the same as a standard of a scheduled carrier. The scheduling carrier is a receive carrier, and the scheduled carrier may be a transmit carrier or a receive carrier.

The cross-carrier scheduling between different standard groups may mean that a standard of a scheduling carrier is different from a standard of a scheduled carrier. The scheduling carrier is a receive carrier, and the scheduled carrier may be a transmit carrier or a receive carrier.

The first communication apparatus may directly send the communication standard supported by the first communication apparatus to the second communication apparatus, or may send identification information of the communication standard supported by the first communication apparatus to the second communication apparatus, to indicate the communication standard supported by the first communication apparatus to the second communication apparatus.

For example, the communication standard supported by the first communication apparatus includes LTE, NR, and 6G. The first communication apparatus may directly send LTE, NR, and 6G to the second communication apparatus, to indicate that the communication standard supported by the first communication apparatus includes LTE, NR, and 6G.

For another example, as shown in Table 5, an example in which identification information of LTE is 0, identification information of NR is 1, and identification information of 6G is 2. Assuming that the communication standard supported by the first communication apparatus includes LTE, NR, and 6G, the first communication apparatus may send 0, 1, and 2 to the second communication apparatus, so that the second communication apparatus determines, based on 0, 1, and 2, that the communication standard supported by the first communication apparatus includes LTE, NR, and 6G.

**Table 5**

| Communication standard | Identification information |
|---|---|
| LTE | 0 |
| NR | 1 |
| 6G | 2 |

When the first communication apparatus supports the inter-RAT CA, the first communication apparatus may indicate, to the second communication apparatus, that the first communication apparatus supports the inter-RAT CA. When the first communication apparatus does not support the inter-RAT CA, the first communication apparatus may indicate, to the second communication apparatus, that the first communication apparatus does not support the inter-RAT CA.

When the first communication apparatus supports the inter-RAT CA, the first communication apparatus may further indicate whether the first communication apparatus supports the cross-carrier scheduling of the inter-RAT CA.

When the first communication apparatus supports the cross-carrier scheduling of the inter-RAT CA, the first communication apparatus may indicate, to the second communication apparatus, that the first communication apparatus supports the cross-carrier scheduling of the inter-RAT CA. When the first communication apparatus does not support the cross-carrier scheduling of the inter-RAT CA, the first communication apparatus may also indicate, to the second communication apparatus, that the first communication apparatus does not support the cross-carrier scheduling of the inter-RAT CA; or the first communication apparatus may not need to indicate, to the second communication apparatus, whether the first communication apparatus supports the cross-carrier scheduling of the inter-RAT CA, so that the second communication apparatus considers by default that the first communication apparatus does not support the cross-carrier scheduling of the inter-RAT CA.

Alternatively, when the first communication apparatus supports the inter-RAT CA and supports the cross-carrier scheduling of the inter-RAT CA, the first communication apparatus may also indicate, to the second communication apparatus, that the first communication apparatus supports the cross-carrier scheduling of the inter-RAT CA, to consider by default that the first communication apparatus supports the inter-RAT CA, so that the first communication apparatus may not need to indicate, to the second communication apparatus, that the first communication apparatus supports the inter-RAT CA. This reduces signaling overheads.

When the first communication apparatus supports the cross-carrier scheduling of the inter-RAT CA, the first communication apparatus may further indicate whether the first communication apparatus supports the cross-carrier scheduling in a same standard carrier group, and/or whether the first communication apparatus supports the cross-carrier scheduling between different standard carrier groups.

The cross-carrier scheduling in a same standard carrier group may indicate cross-carrier scheduling between at least two carriers corresponding to a same standard carrier group. In other words, on one carrier, scheduling information of a carrier that belongs to a same standard carrier group as the carrier may be detected; or scheduling information and data of a carrier may be transmitted on two different carriers, and the two different carriers may belong to a same standard carrier group.

The cross-carrier scheduling between different standard carrier groups may indicate cross-carrier scheduling between at least two carriers corresponding to different standard carrier groups. In other words, on one carrier, scheduling information of a carrier that belongs to a same standard carrier group as the carrier may be detected, and scheduling information of a carrier that belongs to different standard carrier groups from the carrier may also be detected; or scheduling information and data of a carrier may be transmitted on two different carriers, and the two different carriers may belong to different standard carrier groups.

When the first communication apparatus supports the cross-carrier scheduling in a same standard carrier group, the first communication apparatus may indicate, to the second communication apparatus, that the first communication apparatus supports the cross-carrier scheduling in the same standard carrier group. When the first communication apparatus does not support the cross-carrier scheduling in a same standard carrier group, the first communication apparatus may also indicate, to the second communication apparatus, that the first communication apparatus does not support the cross-carrier scheduling in a same standard carrier group; or the first communication apparatus may not need to indicate, to the second communication apparatus, whether the first communication apparatus supports the cross-carrier scheduling in a same standard carrier group, so that the second communication apparatus considers by default that the first communication apparatus does not support the cross-carrier scheduling in a same standard carrier group.

When the first communication apparatus supports the cross-carrier scheduling between different standard carrier groups, the first communication apparatus may indicate, to the second communication apparatus, that the first communication apparatus supports the cross-carrier scheduling between different standard carrier groups. When the first communication apparatus does not support the cross-carrier scheduling between different standard carrier groups, the first communication apparatus may also indicate, to the second communication apparatus, that the first communication apparatus does not support the cross-carrier scheduling between different standard carrier groups; or the first communication apparatus may not need to indicate, to the second communication apparatus, whether the first communication apparatus supports the cross-carrier scheduling between different standard carrier groups, so that the second communication apparatus considers by default that the first communication apparatus does not support the cross-carrier scheduling between different standard carrier groups.

Alternatively, when the first communication apparatus supports the inter-RAT CA, the cross-carrier scheduling of the inter-RAT CA, and the cross-carrier scheduling between different standard carrier groups, the first communication apparatus may also indicate, to the second communication apparatus, that the first communication apparatus supports the cross-carrier scheduling between different standard carrier groups, to consider by default that the first communication apparatus supports the inter-RAT CA and the cross-carrier scheduling of the inter-RAT CA, so that the first communication apparatus may not need to indicate, to the second communication apparatus, that the first communication apparatus supports the inter-RAT CA, or may not need to indicate, to the second communication apparatus either, that the first communication apparatus supports the cross-carrier scheduling of the inter-RAT CA. This reduces signaling overheads.

It should be noted that, for cross-carrier scheduling, the second communication apparatus may schedule uplink information by using scheduling information, or may schedule downlink information by using scheduling information. If the second communication apparatus schedules uplink information by using scheduling information, the first communication apparatus may receive the scheduling information by using a receive carrier, and send the uplink information by using a transmit carrier based on the scheduling information, where the receive carrier and the transmit carrier may correspond to different communication standards. If the second communication apparatus schedules downlink information by using scheduling information, the first communication apparatus may receive the scheduling information by using a receive carrier, and receive the downlink information by using a receive carrier based on the scheduling information, where the two receive carriers may correspond to different communication standards.

Based on the methods shown in FIG. 8 to FIG. 14, as shown in FIG. 15, the first communication apparatus may further communicate with the second communication apparatus by using a method shown in FIG. 15. This embodiment of this application may be used in combination with the foregoing embodiment, or may be independent of the foregoing embodiment. This is not limited.

FIG. 15 is a flowchart of the communication method according to this embodiment of this application. As shown in FIG. 15, the method may include the following steps.

Step 1501: The first communication apparatus sends a blind detection capability. Correspondingly, the second communication apparatus obtains the blind detection capability.

The blind detection capability may be blind detection capabilities corresponding to at least two communication standards supported by the first communication apparatus.

For example, the blind detection capability of the first communication apparatus may include one or more of the following: a maximum quantity of PDCCH candidates for blind detection in one slot, a maximum quantity of non-overlapping CCEs for blind detection in one slot, a maximum quantity of PDCCH candidates for blind detection in one combination (X, Y), a maximum quantity of non-overlapping CCEs for blind detection in one combination (X, Y), and a control information size (size) quantity.

For descriptions of the maximum quantity of PDCCH candidates for blind detection in one slot, the maximum quantity of non-overlapping CCEs for blind detection in one slot, the maximum quantity of PDCCH candidates for blind detection in one combination (X, Y), and the maximum quantity of non-overlapping CCEs for blind detection in one combination (X, Y), refer to the related descriptions of Table 1 to Table 4. Details are not described again.

The control information size quantity may be control information size quantities corresponding to the at least two communication standards supported by the first communication apparatus.

Control information may be control information used to schedule data transmission.

For example, the control information may be DCI, or may be control information in a future communication system, for example, receive control information (receive control information, RxCI). This is not limited.

For example, uplink control information (uplink control information, UCI) may also be uplink control information in the future communication system, for example, transmission control information (transmission control information, TxCI). This is not limited.

For example, a physical downlink control channel PDCCH may also be a reception control channel in the future communication system, for example, a physical reception control channel (physical reception control channel, PRxCCH). This is not limited.

For example, a physical uplink control channel PUCCH may also be a transmission control channel in the future communication system, for example, a physical transmission control channel (physical transmission control channel, PTxCCH). This is not limited.

For example, a physical downlink shared channel PDSCH may also be a reception data channel in the future communication system, for example, a physical reception shared channel (physical reception shared channel, PRxSCH). This is not limited.

For example, a physical uplink shared channel PUSCH may also be a data transmission channel in the future communication system, for example, a physical transmission shared channel (physical transmission shared channel, PTxSCH). This is not limited.

Specifically, the first communication apparatus reports, to the second communication apparatus, the blind detection capabilities corresponding to the at least two communication standards supported by the first communication apparatus, so that the second communication apparatus can configure, based on the blind detection capabilities, quantities of blind detections respectively corresponding to the at least two communication standards supported by the first communication apparatus. Therefore, a total quantity of blind detections is less than the blind detection capability of the first communication apparatus.

For example, the blind detection capability of the first communication apparatus may be a blind detection capability defined for each cell or receive carrier. In other words, for a scheduling policy in an inter-RAT CA scenario, if one scheduling carrier includes scheduling information of a plurality of scheduled carriers, a quantity of blind detections on the scheduling carrier may be related to a quantity of scheduled carriers. The scheduling policy in the inter-RAT CA scenario may include one or more of the following: self-scheduling, cross-carrier scheduling in a same receive standard carrier group, and cross-carrier scheduling between different receive standard carrier groups.

For example, the first communication apparatus may define, for scheduling of each scheduled carrier, a maximum quantity of PDCCH candidates for blind detection and/or a maximum quantity of non-overlapping CCEs for blind detection in each slot or each span pattern.

In the inter-RAT CA scenario, the first communication apparatus may report, to the second communication apparatus, a total blind detection capability corresponding to the at least two communication standards supported by the first communication apparatus.

In an example, the first communication apparatus supports a first communication standard and a second communication standard. The first communication apparatus may report a total quantity of blind detection capabilities of the first communication standard and the second communication standard to the second communication apparatus. Therefore, the second communication apparatus determines, based on a quantity of receive carriers of the first communication standard and a quantity of receive carriers of the second communication standard that are configured for the first communication apparatus, a maximum blind detection capability corresponding to each communication standard.

For example, the blind detection capability reported by the first communication apparatus is M. Assuming that the quantity of receive carriers (or cells) of the first communication standard configured for the first communication apparatus is $c_1$, and the quantity of receive carriers (or cells) of the second communication standard is $c_2$, the second communication apparatus may determine that a maximum quantity of blind detections corresponding to the first communication standard is $c_1/(c_1+c_2)*M$, and a maximum quantity of blind detections corresponding to the second communication standard is $c_2/(c_1+c_2)*M$.

In another example, the first communication apparatus supports a first communication standard and a second communication standard. The first communication apparatus may report a total control information size quantity of the first communication standard and the second communication standard to the second communication apparatus. Therefore, the second communication apparatus determines, based on a quantity of receive carriers of the first communication standard and a quantity of receive carriers of the second communication standard that are configured for the first communication apparatus, a maximum control information size quantity corresponding to each communication standard.

For example, the control information size quantity reported by the first communication apparatus is N. Assuming that the quantity of receive carriers (or cells) of the first communication standard configured for the first communication apparatus is $c_1$, and the quantity of receive carriers (or cells) of the second communication standard is $c_2$, the second communication apparatus may determine that a maximum quantity of blind detections corresponding to the first communication standard is $c_1/(c_1+c_2)*N$, and a maximum quantity of blind detections corresponding to the second communication standard is $c_2/(c_1+c_2)*N$.

In the foregoing example, the quantity of receive carriers may alternatively be a quantity of transmit carriers or a quantity of carriers. For example, a blind detection capability of a communication standard is determined based on a quantity of transmit carriers of the communication standard; or a blind detection capability of a communication standard is determined based on a sum of a quantity of transmit carriers of the communication standard and a quantity of receive carriers of the communication standard; or a blind detection capability of a communication standard is determined based on a maximum value between a quantity of transmit carriers of the communication standard and a quantity of receive carriers of the communication standard; or a blind detection capability of a communication standard is determined based on a quantity of carriers of the communication standard.

Step 1502: The second communication apparatus sends configuration information of scheduling information. Correspondingly, the first communication apparatus obtains the configuration information of the scheduling information.

The configuration information of the scheduling information may include one or more of the following: second configuration information and cross-carrier scheduling configuration information.

The second configuration information may include one or more of the following information: configuration information of a control resource set corresponding to each of the at least two communication standards, and configuration information of a search space corresponding to each communication standard.

In a possible design, different communication standards correspond to different control resource sets.

Time-frequency resources of control resource sets corresponding to different communication standards may overlap, or may not overlap. This is not limited.

Optionally, the configuration information of the control resource set includes information about the communication standard corresponding to the control resource set.

Optionally, the configuration information of the control resource set includes a quantity of blind detections corresponding to the communication standard corresponding to the control resource set.

For example, the first communication apparatus supports the first communication standard and the second communication standard. The second communication apparatus may configure a first control resource set for the first communication standard, and configure a second control resource set for the second communication standard.

For example, as shown in Table 6, the control resource set corresponding to the first communication standard may be CORESET 1 to CORESET C, and the control resource set corresponding to the second communication standard may be CORESET C+1 to CORESET D.

**Table 6**

| Communication standard | Control resource set |
|---|---|
| First communication standard | CORESET 1 to CORESET C |
| Second communication standard | CORESET C+1 to CORESET D |

In another possible design, different communication standards correspond to different search spaces of a same control resource set.

The second communication apparatus may configure one control resource set for the first communication apparatus. Configuration information of the control resource set may include configuration information of a search space and/or a quantity of blind detections corresponding to one or more communication standards.

The configuration information of the search space may include one or more of the following: a CCE indication, a CCE design method, a search space indication, a search space design method, and the like. This is not limited.

It should be noted that, for different communication standards, CCE definitions and/or search space designs may be different. In other words, the first communication apparatus may alternatively determine a CCE definition and/or a search space design based on a communication standard.

For example, if the communication standard is NR, the CCE definition and/or the search space design may be determined based on the communication standard. For details, refer to descriptions in the protocol 38.211 v16.0. For example, one CCE includes six resource element groups (resource element group, REG), and one REG is one RB on one symbol, for example, 12 REs. REGs in one CCE are numbered first in time domain and then in frequency domain, and the CCE is numbered 0 starting from the 1st symbol and the lowest-numbered RB. CCE-to-REG mapping (CCE-to-REG mapping) may be interleaved or non-interleaved, and is described as follows by using a REG bundle (REG bundles):

An REG bundle i is defined as REGs {$iL$, $iL$+1, ..., $iL+L$-1}, where L is a size of the REG bundle, $i = 0,1, ..., N_{REG}^{\mathrm{CORESET}}/L - 1$, $N_{\mathrm{REG}}^{\mathrm{CORESET}} = N_{\mathrm{RB}}^{\mathrm{CORESET}} N_{\mathrm{symb}}^{\mathrm{CORESET}}$ is a quantity of REGs in CORESET, $N_{\mathrm{RB}}^{\mathrm{CORESET}}$ is a quantity of RBs included in CORESET, and $N_{\mathrm{symb}}^{\mathrm{CORESET}}$ is a quantity of symbols included in CORESET.

A CCE $j$ consists of REG bundles {$f(j/L)$, $f(6j/L$+1), ..., $f(6j/L$+6/$L$-1)}, where $f(\bullet)$ is an interleaver.

For non-interleaved CCE-to-REG mapping, $L = 6$ and $f(x) = x$.

For interleaved CCE-to-REG mapping, for $N_{\mathrm{symb}}^{\mathrm{CORESET}} = 1$, $L \in \{2,6\}$; and for $N_{\mathrm{symb}}^{\mathrm{CORESET}} \in \{2,3\}$, $L \in \{N_{\mathrm{symb}}^{\mathrm{CORESET}}, 6\}$.

Interleaving is defined as follows:

$$f(x) = (rC + c + n_{\mathrm{shift}}) \bmod \left(N_{\mathrm{REG}}^{\mathrm{CORESET}}/L\right);$$

$$x = cR + r;$$

$$r = 0,1, ..., R - 1;$$

$$c = 0,1, ..., C - 1;$$

and

$$C = N_{\mathrm{REG}}^{\mathrm{CORESET}}/(LR).$$

Herein, $R \in \{2, 3, 6\}$.

For another example, if the communication standard is LTE, the CCE definition and/or the search space design may be determined based on the communication standard. For details, refer to descriptions in the protocol 36.211 v16.0.

For example, one CCE includes nine REGs, and one REG includes four or six REs. One PDCCH is transmitted on n consecutive CCEs, and each CCE consists of nine REGs. A start CCE index i of the PDCCH needs to meet the following condition: $i$ mod $n$=0, and i ranges from 0 to $N_{CCE,k}$-1, where $N_{CCE,k}$-1 is a total quantity of CCEs available for the PDCCH in a subframe k. In other words, a number of a CCE in which a start position of a PDCCH formed by n CCEs is located needs to be an integer multiple of n.

For another example, the communication standard is 6G. In this case, for the CCE definition and/or the search space, refer to the foregoing design, or refer to a design in new future communication. Specifically, this is not limited in this application.

For example, the first communication apparatus supports the first communication standard and the second communication standard. The second communication apparatus may configure a third control resource set for the first communication standard and the second communication standard. Configuration information of the third control resource set may include configuration information of a first search space and/or configuration information of a first quantity of blind detections corresponding to the first communication standard, and may further include configuration information of a second search space and/or configuration information of a second quantity of blind detections corresponding to the second communication standard.

For example, as shown in Table 7, the first search space corresponding to the first communication standard may be SS 1 to SS P, and the second search space corresponding to the second communication standard may be SS P+1 to SS Q.

**Table 7**

| Communication standard | Search space |
|---|---|
| First communication standard | SS 1 to SS P |
| Second communication standard | SS P+1 to SS Q |

In another possible design, different communication standards correspond to a same search space.

Alternatively, scheduling information of carriers of different communication standards may share a search space.

For example, the first communication apparatus supports the first communication standard and the second communication standard. The second communication apparatus may configure a third search space for the first communication standard and the second communication standard.

Optionally, the second communication apparatus may configure a same search space for the at least two communication standards supported by the first communication apparatus.

Optionally, the cross-carrier scheduling configuration information may include a self-scheduling configuration (own) and/or a cross-carrier scheduling configuration (other). In the cross-carrier scheduling configuration, the second communication apparatus may indicate identification information of a standard carrier group of a scheduling carrier, identification information of the scheduling carrier, and carrier indicator field information of a scheduled carrier in the scheduling carrier.

For example, the second communication apparatus may indicate the identification information of the standard carrier group, the carrier identification information, and the carrier indicator field information in the cross-carrier scheduling configuration information, so that the first communication apparatus can determine a CCE identifier of a PDCCH candidate based on the identification information of the standard carrier group and the carrier identification information.

For example, an information element format corresponding to the cross-carrier scheduling configuration information is as follows:

For the cross-carrier scheduling (other), the second communication apparatus may configure, for the first communication apparatus, information about a carrier on which control information for scheduling the carrier is located. The information may be indicated through the identification information of the standard carrier group and the carrier identification information. For example, the second communication apparatus configures schedulingrat-cellgroupID and schedulingCellId for the first communication apparatus, where "schedulingrat-cellgroupID" indicates identification information of a standard carrier group in which a scheduling carrier is located, and "schedulingCellId" indicates carrier identification information.

```
CrossCarrierSchedulingConfig ::=        SEQUENCE {
     schedulingCellInfo                 CHOICE {
          own                SEQUENCE {   -- Cross carrier scheduling: scheduling cell
          cif-Presence                        BOOLEAN
          },
          other              SEQUENCE {     -- Cross carrier scheduling: scheduled
cell
          schedulingrat-cellgroupID           RAT-CellgroupIndex,      --optional
          schedulingCellId                    ServCellIndex,
               cif-InSchedulingCellperRAT        INTEGER (1..7)
          }
     },
```

Optionally, the cross-carrier scheduling configuration information may include a self-scheduling configuration (own), and/or a cross-carrier scheduling configuration (intra RAT-cell group scheduling) in a same standard carrier group, and/or a cross-carrier scheduling configuration (interRAT-cellgroupscheduling) between different standard carrier groups. In the cross-carrier scheduling configuration in a same standard carrier group, the second communication apparatus may indicate identification information of a scheduling carrier and carrier indicator field information of a scheduled carrier in the scheduling carrier. In the configuration of cross-carrier scheduling between different standard carrier groups, the second communication apparatus may indicate identification information of a standard carrier group of a scheduling carrier, identification information of the scheduling carrier, and carrier indicator field information of a scheduled carrier in the scheduling carrier.

Alternatively, for example, an information element format corresponding to the cross-carrier scheduling configuration information is as follows:

For cross-carrier scheduling (intra RAT-cell group scheduling) in a same standard carrier group, the second communication apparatus may configure, for the first communication apparatus, information about a carrier on which control information for scheduling the carrier is located. The information may be indicated through the carrier identification information. For example, the second communication apparatus configures schedulingCellId for the first communication apparatus, where "schedulingCellId" indicates the carrier identification information.

For cross-carrier scheduling between different standard carrier groups (interRAT-cellgroupscheduling), the second communication apparatus may configure, for the first communication apparatus, information about a carrier on which control information for scheduling the carrier is located. The information may be indicated through the identification information of the standard carrier group and the carrier identification information. For example, the second communication apparatus configures schedulingrat-cellgroupID and schedulingCellId for the first communication apparatus, where "schedulingrat-cellgroupID" indicates identification information of a standard carrier group in which a scheduling carrier is located, and "schedulingCellId" indicates the carrier identification information.

```
CrossCarrierSchedulingConfig ::=           SEQUENCE {
     schedulingCellInfo                         CHOICE {
          own                          SEQUENCE {        -- Cross carrier scheduling:
scheduling cell
               cif-Presence                          BOOLEAN
          },
          intraRAT-cellgroupscheduling   SEQUENCE {      -- Cross carrier scheduling:
scheduled cell
               schedulingCellId                      ServCellIndex,
               cif-InSchedulingCell                  INTEGER (1..7)
          }
          interRAT-cellgroupscheduling   SEQUENCE {      -- Cross carrier scheduling:
scheduled cell
               schedulingrat-cellgroupID                 RAT-CellgroupIndex,        --optional

               schedulingCellId                          ServCellIndex,
               cif-InSchedulingCellperRAT                INTEGER (1..7)
          }
     },
```

In addition, for a definition of a PDCCH candidate in a search space, a corresponding CCE identifier may be determined based on the identification information of the standard carrier group and the carrier indicator field information.
For example, the CCE identifier may be determined by using the following formula:

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{RAT} * n_{maxCI} \right) \bmod \left\lfloor N_{CCE,p}/L \right\rfloor \right\} + i \;:\;$$

Herein, L is a CCE aggregation level. When the search space is a common search space (common search space, CSS), $Y_{p,n_s^{\mu},f} = 0.$ . When the search space is a terminal-level search space (UE search space), $Y_{p,n_{s,f}^{\mu}} = \left( A_p \cdot Y_{p,n_{s,f}^{\mu}-1} \right) \bmod D$ , and $y_{p,-1} = n_{RNTI} \neq 0$. When $p \bmod 3 = 0$, $A_p = 39827$. When $p \bmod 3 = 1$, $A_p = 39829$. When $p \bmod 3 = 2$, $A_p = 39839$, D=65537, i=0, ..., or L-1, $N_{CCE,p}$ is a quantity of CCEs in CORESET p, and a CCE number (or identifier) ranges from 0 to $N_{CCE,p}$-1. When the first communication apparatus detects a serving cell or a carrier of a PDCCH, if the first communication apparatus is configured with carrier indicator field information by using Cross Carrier Scheduling Config, $n_{CI}$ is a value of a carrier indicator field. Otherwise, the common search space is included, $n_{CI}=0$,

$$m_{s,n_{CI}} = 0, \ldots, M^{(L)}_{s,n_{CI}} - 1$$

and . Herein, $M^{(L)}_{s,n_{CI}}$ is a quantity of PDCCH candidates at a CCE aggregation level L in a search space set s of a serving cell or a carrier corresponding to $n_{CI}$ configured for the first communication apparatus.

$$M^{(L)}_{s,max} = M^{(L)}_{s,0} \cdot$$

For the common search space, . For the UE search space, $M^{(L)}_{s,max}$ is a maximum value of all configured values of $n_{CI}$ of a search space set s for a CCE aggregation level L. $n_{RAT}$ is identification information of a communication standard. $n_{maxCI}$ is identification information of a maximum carrier configured in the communication standard.

It should be noted that there is no sequence for performing step 1501 and step 1502. Step 1501 may be performed before step 1502; or step 1502 may be performed before step 1501; or step 1501 and step 1502 are simultaneously performed. This is not limited.

Step 1503: The second communication apparatus sends the scheduling information. Correspondingly, the first communication apparatus obtains the scheduling information.

In this application, the scheduling information may be used to schedule downlink information, or may be used to schedule uplink information. Alternatively, the scheduling information may be used to schedule the first communication apparatus to send data, or may be used to schedule the first communication apparatus to receive data.

In a possible design, the first communication apparatus may support the cross-carrier scheduling in a same standard carrier group.

A scheduling carrier may be determined based on a standard carrier group in which a scheduled carrier is located. Numbering is performed in a standard carrier group, and a carrier indicated by a CFI may be a carrier determined based on a carrier number in a standard carrier group in which a current carrier is located.

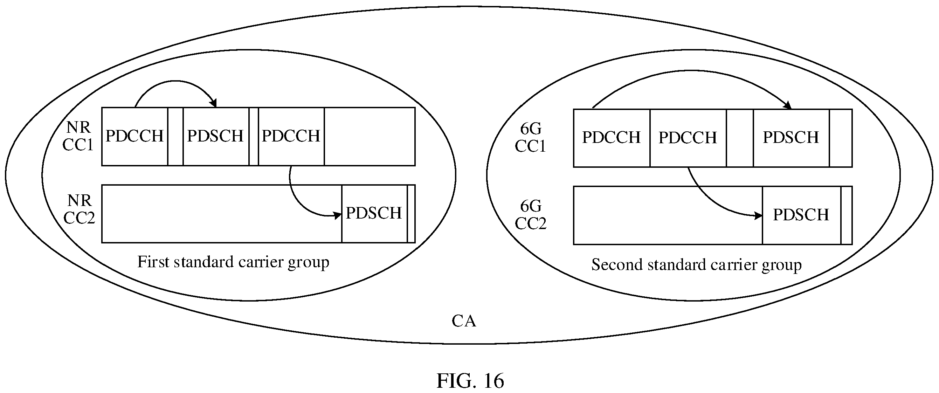

For example, the second communication apparatus configures two standard carrier groups for the first communication apparatus. It is assumed that a communication standard corresponding to the first standard carrier group is NR, the first standard carrier group includes NR CC 1 and NR CC 2, a communication standard corresponding to the second standard carrier group is 6G, and the second standard carrier group includes 6G CC 1 and 6G CC 2. When the first communication apparatus supports the cross-carrier scheduling in a same standard carrier group, as shown in FIG. 16, in the first standard carrier group, NR CC 1 may schedule data transmission on NR CC 2, that is, scheduling information of NR CC 2 may be transmitted on NR CC 1; and in the second standard carrier group, 6G CC 1 may schedule data transmission on 6G CC 2, that is, scheduling information of 6G CC 2 may be transmitted on 6G CC 1.

In another possible design, the first communication apparatus may support the cross-carrier scheduling between different standard carrier groups.

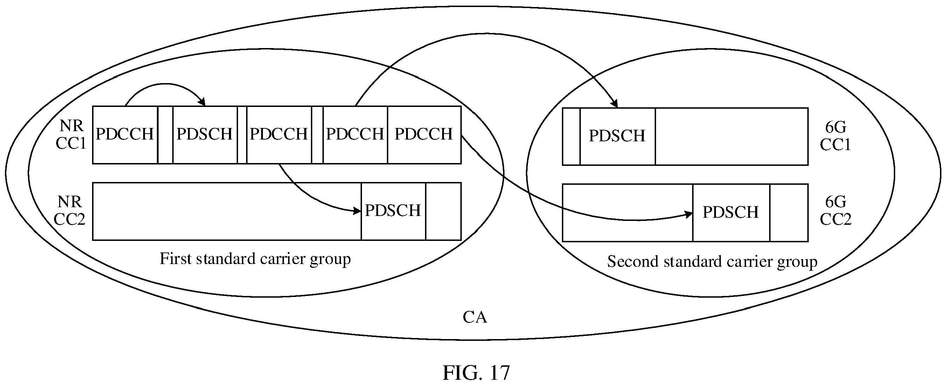

For example, the second communication apparatus configures two standard carrier groups for the first communication apparatus. It is assumed that a communication standard corresponding to the first standard carrier group is NR, the first standard carrier group includes NR CC 1 and NR CC 2, a communication standard corresponding to the second standard carrier group is 6G, and the second standard carrier group includes 6G CC 1 and 6G CC 2. When the first communication apparatus supports the cross-carrier scheduling between different standard carrier groups, as shown in FIG. 17, in the first standard carrier group, NR CC 1 may schedule data transmission on NR CC 2, that is, scheduling information of NR CC 2 may be transmitted on NR CC 1; NR CC 1 may schedule data transmission on 6G CC 1, that is, scheduling information of 6G CC 1 may be transmitted on NR CC 1; and NR CC 1 may schedule data transmission on 6G CC 2, that is, scheduling information of 6G CC 2 may be transmitted on NR CC 1.

The second communication apparatus may send the scheduling information by using the control information.

In an example, the first communication apparatus supports the first communication standard and the second communication standard, and a first carrier corresponds to the first communication standard. The second communication apparatus may send control information corresponding to the second communication standard on the first carrier based on one or more of the following information corresponding to the first communication standard: a blind detection capability, a control resource set, and a search space.

For example, DCI of NR is sent on a downlink carrier of 6G. Specific designs and/or detection methods of the control resource set and the search space may be performed based on 6G.

For another example, DCI of 6G is sent on a downlink carrier of NR. Specific designs and/or detection methods of the control resource set and the search space may be performed based on NR.

In another example, the first communication apparatus supports the first communication standard and the second communication standard, and a first carrier corresponds to the first communication standard. The second communication apparatus may also send control information corresponding to the second communication standard on the first carrier based on the second communication standard.

Optionally, specific designs and/or detection methods of the control resource set and the search space that are specified in a communication protocol corresponding to the second communication standard are written in a communication protocol corresponding to the first communication standard, so that the control information corresponding to the second communication standard is sent on the first carrier based on the second communication standard.

Optionally, a control resource set corresponding to the second communication standard is configured on the first carrier, so that the control information corresponding to the second communication standard is sent on the first carrier based on the second communication standard. It should be noted that the PDCCH corresponding to the second communication standard may be not configured on the 1st symbol.

For example, DCI of NR is sent on a downlink carrier of 6G. Specific designs and/or detection methods of the control resource set and the search space may be performed based on NR.

Specific designs and/or detection methods of the control resource set and the search space that are specified in an NR communication protocol may be written in a 6G communication protocol, so that the DCI of NR is sent on the downlink carrier of 6G based on NR. Alternatively, a control resource set corresponding to NR may be configured on the downlink carrier of 6G, so that the DCI of NR is sent on the downlink carrier of 6G based on NR. It should be noted that the PDCCH corresponding to NR is not configured on the 1st symbol.

For another example, DCI of 6G is sent on a downlink carrier of NR. Specific designs and/or detection methods of the control resource set and the search space may be performed based on 6G.

Specific designs and/or detection methods of the control resource set and the search space that are specified in a 6G communication protocol may be written in an NR communication protocol, so that the DCI of 6G is sent on the downlink carrier of NR based on 6G. Alternatively, a control resource set corresponding to 6G may be configured on the downlink carrier of NR, so that the DCI of 6G is sent on the downlink carrier of NR based on 6G.

In still another example, the first communication apparatus supports the first communication standard and the second communication standard. The second communication apparatus may also send the control information corresponding to the second communication standard on the first carrier based on a communication standard corresponding to the capability information of the first communication apparatus or a communication standard predefined in a communication protocol.

It should be noted that, in the foregoing three examples, specific designs/detection methods of the control resource set and the search space corresponding to different communication standards may be different.

In a possible design, different communication standards correspond to a same control information format, or different communication standards correspond to a same control information bit size.

Optionally, a control information bit size in each communication standard is calculated, and bit padding is performed on control information with a small quantity of bits, so that different communication standards correspond to a same control information bit size.

For example, the first communication standard and the second communication standard supported by the first communications apparatus are used as an example. Control information of the first communication standard and control information of the second communication standard may correspond to a first control information format.

Optionally, the control information includes first indication information, and the first indication information indicates a communication standard, so that the first communication apparatus parses the detected control information based on the communication standard indicated by the first indication information.

The communication standard indication information may be carrier identification information, or may be standard carrier group identification information.

Optionally, the communication standard corresponding to the control information is indicated by using the CIF.

Alternatively, a new control information format is designed, and the new control information format includes a bit field of the control information of each communication standard.

The bit field of each communication standard may be parsed based on the corresponding communication standard.

For example, a scheduling carrier is LTE, and a scheduled carrier is NR; or a scheduling carrier is NR, and a scheduled carrier is LTE. A control information format (for example, a control information format X) may be newly added to be compatible with NR and LTE. Alternatively, a format in the protocol 38.212 NR may be introduced into the protocol 36.212 LTE. Alternatively, a format in the protocol 36.212 LTE may be introduced into the protocol 38.212 NR. Alternatively, an extended control information format (for example, a control information format Y) may be newly added, each information field in NR and LTE may be included, one control information format may be used in both LTE and NR, and explanation of each information field may be parsed separately in a manner of LTE and a manner of NR. Alternatively, an information field of control information may be added to original control information in 36.212/38.212 to be compatible with NR and LTE. Alternatively, each information field may be parsed in a manner of LTE or NR, or may be described as a new explanation in an old field (for example, a meaning of an information field such as a frequency domain resource indication, an RBG size, or an MCS indication is redefined). Alternatively, an indication may be newly added in NR, for example, a bandwidth part indicator (bandwidth part indicator), a time domain resource assignment (time domain resource assignment), or a UL/SUL indicator (UL/SUL indicator).

Based on this possible design, different communication standards correspond to a same control information format, so that a quantity of blind detections can be reduced, and an available PDCCH candidate location can be increased.

In another possible design, quantities of bits of control information corresponding to different communication standards are different.

A quantity of blind detections and a control information size quantity that correspond to different communication standards may be determined based on a quantity of carriers of the communication standards.

In still another possible design, different communication standards correspond to different control information formats.

For example, the first communication standard may correspond to a second control information format, and the second communication standard may correspond to a third control information format.

For example, as shown in Table 8, the control information format corresponding to the first communication standard may be a control information format x-1, and the control information format corresponding to the second communication standard may be a control information format x-2.

**Table 8**

| Control information format | Communication standard |
|---|---|
| Control information format x-1 | First communication standard |
| Control information format x-2 | Second communication standard |

Step 1504: The first communication apparatus communicates with the second communication apparatus based on the scheduling information

The first communication apparatus may obtain the scheduling information by detecting the control information.

In an example, the first communication apparatus supports the first communication standard and the second communication standard, and a first carrier corresponds to the first communication standard. The first communication apparatus may detect control information corresponding to the second communication standard on the first carrier based on one or more of the following information corresponding to the first communication standard: a blind detection capability, a control resource set, and a search space; and parse the control information based on the second communication standard.

For example, DCI of NR is detected on a downlink carrier of 6G. Specific designs and/or detection methods of the control resource set and the search space may be performed based on 6G; and the control information may be parsed based on NR.

For another example, DCI of 6G is detected on a downlink carrier of NR. Specific designs and/or detection methods of the control resource set and the search space may be performed based on NR; and the control information may be parsed based on 6G.

In another example, the first communication apparatus supports the first communication standard and the second communication standard, and a first carrier corresponds to the first communication standard. The first communication apparatus may also detect control information corresponding to the second communication standard on the first carrier based on the second communication standard; and parse the control information based on the second communication standard.

Optionally, specific designs and/or detection methods of the control resource set and the search space that are specified in a communication protocol corresponding to the second communication standard are written in a communication protocol corresponding to the first communication standard, so that the control information corresponding to the second communication standard is detected on the first carrier based on the second communication standard.

Optionally, the control resource set corresponding to the second communication standard is configured on the first carrier, so that the control information corresponding to the second communication standard is detected on the first carrier based on the second communication standard. It should be noted that the PDCCH corresponding to the second communication standard is not configured on the 1st symbol.

For example, DCI of NR is sent on a downlink carrier of 6G. Specific designs and/or detection methods of the control resource set and the search space may be performed based on NR; and the control information may be parsed based on NR.

Specific designs and/or detection methods of the control resource set and the search space that are specified in an NR communication protocol may be written in a 6G communication protocol, so that the DCI of NR is detected on the downlink carrier of 6G based on NR. Alternatively, a control resource set corresponding to NR may be configured on the downlink carrier of 6G, so that the DCI of NR is detected on the downlink carrier of 6G based on NR. It should be noted that the PDCCH corresponding to NR is not configured on the 1st symbol.

For another example, DCI of 6G is sent on a downlink carrier of NR. Specific designs and/or detection methods of the control resource set and the search space may be performed based on 6G; and the control information may be parsed based on 6G.

Specific designs and/or detection methods of the control resource set and the search space that are specified in a 6G communication protocol may be written in an NR communication protocol, so that the DCI of 6G is detected on the downlink carrier of NR based on 6G. Alternatively, a control resource set corresponding to 6G may be configured on the downlink carrier of NR, so that the DCI of 6G is detected on the downlink carrier of NR based on 6G.

In still another example, the first communication apparatus supports the first communication standard and the second communication standard. The first communication apparatus may also detect the control information corresponding to the second communication standard on the first carrier based on a communication standard corresponding to the capability information of the first communication apparatus or a communication standard predefined in a communication protocol.

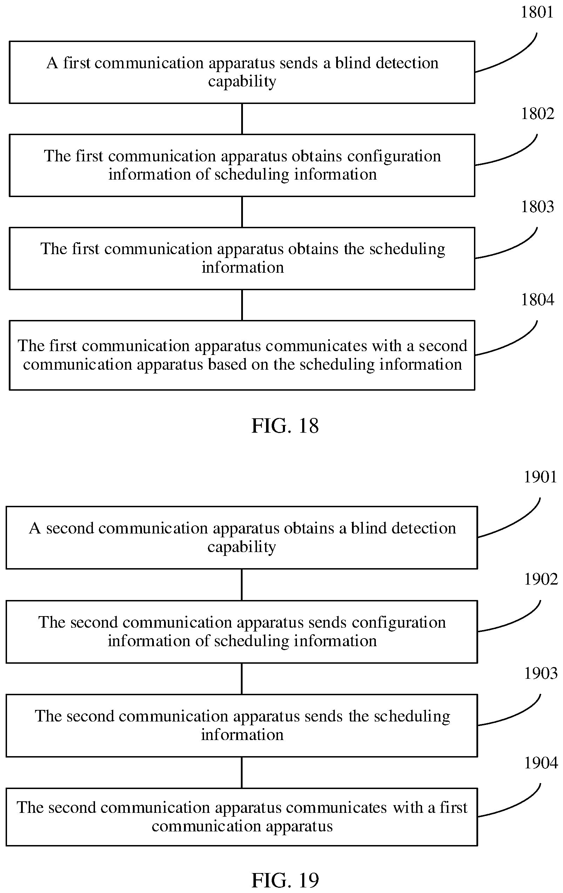

Based on the method shown in FIG. 15, alternatively, as shown in FIG. 18, a communication method provided in an embodiment of this application may be described from the perspective of the first communication apparatus.

FIG. 18 shows the communication method according to this embodiment of this application. As shown in FIG. 18, the method may include the following steps.

Step 1801: The first communication apparatus sends a blind detection capability.

Specifically, for specific descriptions of sending the blind detection capability by the first communication apparatus, refer to the related descriptions of sending the blind detection capability by the first communication apparatus in step 1501. Details are not described again.

Step 1802: The first communication apparatus obtains configuration information of scheduling information.

Specifically, for specific descriptions of obtaining the configuration information of the scheduling information by the first communication apparatus, refer to the related descriptions of sending the configuration information of the scheduling information by the second communication apparatus in step 1502. Details are not described again.

Step 1803: The first communication apparatus obtains the scheduling information.

Specifically, for specific descriptions of obtaining the scheduling information by the first communication apparatus, refer to the related descriptions of sending the scheduling information by the second communication apparatus in step 1503. Details are not described again.

Step 1804: The first communication apparatus communicates with the second communication apparatus based on the scheduling information

Specifically, for specific descriptions of communicating with the second communication apparatus by the first communication apparatus based on the scheduling information, refer to the related descriptions of communicating with the second communication apparatus by the first communication apparatus based on the scheduling information in step 1504. Details are not described again.

Based on the methods shown in FIG. 15 and FIG. 18, alternatively, as shown in FIG. 19, a communication method provided in an embodiment of this application may be described from the perspective of the second communication apparatus.

FIG. 19 shows the communication method according to this embodiment of this application. As shown in FIG. 19, the method may include the following steps.

Step 1901: The second communication apparatus obtains a blind detection capability.

Specifically, for specific descriptions of obtaining the blind detection capability by the second communication apparatus, refer to the related descriptions of sending the blind detection capability by the first communication apparatus in step 1501. Details are not described again.

Step 1902: The second communication apparatus sends configuration information of scheduling information.

Specifically, for specific descriptions of sending the configuration information of the scheduling information by the second communication apparatus, refer to the related descriptions of sending the configuration information of the scheduling information by the second communication apparatus in step 1502. Details are not described again.

Step 1903: The second communication apparatus sends the scheduling information.

Specifically, for specific descriptions of sending the scheduling information by the second communication apparatus, refer to the related descriptions of sending the scheduling information by the second communication apparatus in step 1503. Details are not described again.

Step 1904: The second communication apparatus communicates with the first communication apparatus.

Specifically, for specific descriptions of communicating with the first communication apparatus by the second communication apparatus, refer to the related descriptions of communicating with the second communication apparatus by the first communication apparatus in step 1504. Details are not described again.

This embodiment of this application may be an independent embodiment, or may be combined with another embodiment of this application. Specifically, this is not limited in this application.

The foregoing mainly describes the solutions provided in embodiments of this application from the perspective of interaction between devices. It may be understood that, to implement the foregoing functions, the devices include hardware structures and/or software modules corresponding to the functions. A person skilled in the art should be easily aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each device may be divided into function modules based on the foregoing method examples. For example, each function module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

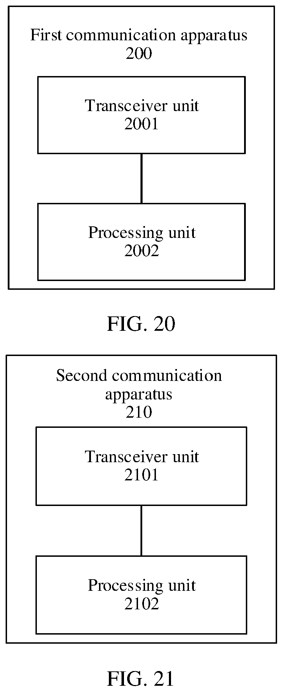

When each function module is obtained through division based on each corresponding function, FIG. 20 shows a first communication apparatus. The first communication apparatus 200 may include a transceiver unit 2001 and a processing unit 2002. For example, the first communication apparatus 200 may be a first communication apparatus, or may be a chip applied to the first communication apparatus, or may be another combined component or a component that has functions of the first communication apparatus. When the first communication apparatus 200 is the first communication apparatus, the transceiver unit 2001 may be a transceiver, and the transceiver may include an antenna, a radio frequency circuit, and the like; and the processing unit 2002 may be a processor (or a processing circuit), for example, a baseband processor, and the baseband processor may include one or more CPUs. When the first communication apparatus 200 is the component having the functions of the first communication apparatus, the transceiver unit 2001 may be a radio frequency unit; and the processing unit 2002 may be a processor (or a processing circuit), for example, a baseband processor. When the first communication apparatus 200 is a chip system, the transceiver unit 2001 may be an input/output interface of a chip (for example, a baseband chip); and the processing unit 2002 may be a processor (or a processing circuit) or a logic circuit of the chip system, and may include one or more central processing units. It should be understood that the transceiver unit 2001 in this embodiment of this application may be implemented by a transceiver or a transceiver-related circuit component, and the processing unit 2002 may be implemented by a processor or a processor-related circuit component (or referred to as a processing circuit).

For example, the transceiver unit 2001 may be configured to perform all receiving and sending operations performed by the first communication apparatus in the embodiments shown in FIG. 8 to FIG. 19, and/or configured to support another process of the technology described in this specification; and the processing unit 2002 may be configured to perform all operations other than the receiving and sending operations performed by the first communication apparatus in the embodiments shown in FIG. 8 to FIG. 19, and/or configured to support another process of the technology described in this specification.

The transceiver unit 2001 is configured to obtain first configuration information, where the first configuration information indicates the first communication apparatus to perform carrier aggregation communication on at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

The processing unit 2002 is configured to perform carrier aggregation communication on the at least two receive carriers based on the first configuration information.

In another possible implementation, the transceiver unit 2001 in FIG. 20 may be replaced with a transceiver, and the function of the transceiver unit 2001 may be integrated into the transceiver; and the processing unit 2002 may be replaced with a processor, and the function of the processing unit 2002 may be integrated into the processor. The first communication apparatus 200 shown in FIG. 20 may further include a memory. When the transceiver unit 2001 is replaced with a transceiver, and the processing unit 2002 is replaced with a processor, the first communication apparatus 200 in this embodiment of this application may be the communication apparatus shown in FIG. 7.

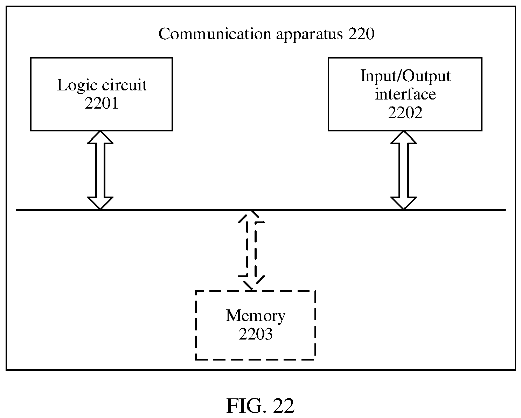

Alternatively, when the transceiver unit 2001 is replaced with a transceiver, and the processing unit 2002 is replaced with a processor, the first communication apparatus 200 in this embodiment of this application may be a communication apparatus 220 shown in FIG. 22. The processor may be a logic circuit 2201, and the transceiver may be an input/output interface 2202. The communication apparatus 220 shown in FIG. 22 may further include a memory 2203.

When each function module is obtained through division based on each corresponding function, FIG. 21 shows a second communication apparatus. The second communication apparatus 210 may include a transceiver unit 2101 and a processing unit 2102. For example, the second communication apparatus 210 may be a second communication apparatus, or may be a chip applied to the second communication apparatus, or may be another combined component or a component that has functions of the second communication apparatus. When the second communication apparatus 210 is the second communication apparatus, the transceiver unit 2101 may be a transceiver, and the transceiver may include an antenna, a radio frequency circuit, and the like; and the processing unit 2102 may be a processor (or a processing circuit), for example, a baseband processor, and the baseband processor may include one or more CPUs. When the second communication apparatus 210 is the component having the functions of the second communication apparatus, the transceiver unit 2101 may be a radio frequency unit; and the processing unit 2102 may be a processor (or a processing circuit), for example, a baseband processor. When the second communication apparatus 210 is a chip system, the transceiver unit 2101 may be an input/output interface of a chip (for example, a baseband chip); and the processing unit 2102 may be a processor (or a processing circuit) or a logic circuit of the chip system, and may include one or more central processing units. It should be understood that the transceiver unit 2101 in this embodiment of this application may be implemented by a transceiver or a transceiver-related circuit component, and the processing unit 2102 may be implemented by a processor or a processor-related circuit component (or referred to as a processing circuit).

For example, the transceiver unit 2101 may be configured to perform all receiving and sending operations performed by the second communication apparatus in the embodiments shown in FIG. 8 to FIG. 19, and/or configured to support another process of the technology described in this specification; and the processing unit 2102 may be configured to perform all operations other than the receiving and sending operations performed by the second communication apparatus in the embodiments shown in FIG. 8 to FIG. 19, and/or configured to support another process of the technology described in this specification.

The transceiver unit 2101 is configured to send first configuration information, where the first configuration information indicates a first communication apparatus to perform carrier aggregation communication on at least two receive carriers, the at least two receive carriers include a first receive carrier and a second receive carrier, the first receive carrier corresponds to a first communication standard, the second receive carrier corresponds to a second communication standard, and the first communication standard is different from the second communication standard.

The processing unit 2102 is configured to perform carrier aggregation communication on the at least two receive carriers based on the first configuration information.

In another possible implementation, the transceiver unit 2101 in FIG. 21 may be replaced with a transceiver, and the function of the transceiver unit 2101 may be integrated into the transceiver; and the processing unit 2102 may be replaced with a processor, and the function of the processing unit 2102 may be integrated into the processor. The second communication apparatus 210 shown in FIG. 21 may further include a memory. When the transceiver unit 2101 is replaced with a transceiver, and the processing unit 2102 is replaced with a processor, the second communication apparatus 210 in this embodiment of this application may be the communication apparatus shown in FIG. 7.

Alternatively, when the transceiver unit 2101 is replaced with a transceiver, and the processing unit 2102 is replaced with a processor, the second communication apparatus 210 in this embodiment of this application may be a communication apparatus 220 shown in FIG. 22. The processor may be a logic circuit 2201, and the transceiver may be an input/output interface 2202. The communication apparatus 220 shown in FIG. 22 may further include a memory 2203.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the terminal (including a data transmit end and/or a data receive end) in any one of the foregoing embodiments, for example, a hard disk drive or a memory of the terminal. Alternatively, the computer-readable storage medium may be an external storage device of the terminal, for example, a plug-in hard disk, a smart media card (smart media card, SMC), a secure digital (secure digital, SD) card, a flash card (flash card), or the like configured on the terminal. Further, the computer-readable storage medium may alternatively include both of the internal storage unit and the external storage device of the terminal. The computer-readable storage medium is configured to store the computer program and other programs and data that are required by the terminal. The computer-readable storage medium may be further configured to temporarily store data that has been output or is to be output.

It should be noted that, in this specification, the claims, and the accompanying drawings of this application, terms "first", "second", and the like are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate the following three cases: Only A exists, only B exists, and both A and B exist, where A and B may be singular or plural. A character "/" generally indicates an "or" relationship between the associated objects. In addition, "at least one of the following items (pieces)" or a similar expression thereof means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

The foregoing descriptions about implementations allow a person skilled in the art to understand that, for the purpose of convenient and brief description, division into the foregoing function modules is used as an example for illustration. During actual application, the foregoing functions can be allocated to different modules and implemented according to a requirement, that is, an inner structure of an apparatus is divided into different function modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, that is, may be located in one place, or may be distributed on different places. Some or all of the units may be selected according to actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

**Claims**

1. A communication method, comprising:

   obtaining, by a first communication apparatus, first configuration information, wherein the first configuration information indicates the first communication apparatus to perform carrier aggregation communication on at least two receive carriers, the at least two receive carriers comprise a first receive carrier and a second receive carrier, the first receive carrier corresponds to a first communication standard, the second receive carrier corresponds to a second communication standard, and the first communication standard is different from the second communication standard; and
   performing, by the first communication apparatus, carrier aggregation communication on the at least two receive carriers based on the first configuration information.

2. The method according to claim 1, wherein
   the first configuration information comprises configuration information of at least two receive standard carrier groups, wherein the configuration information of the receive standard carrier group comprises identification information of the receive standard carrier group and identification information of at least one receive carrier in the receive standard carrier group, and the identification information of the receive standard carrier group indicates a communication standard corresponding to the receive standard carrier group.

3. The method according to claim 1, wherein
   the first configuration information comprises identification information and standard information of the at least two receive carriers, wherein the standard information indicates a communication standard of a receive carrier corresponding to the identification information.

**4.** The method according to any one of claims 1 to 3, wherein the method further comprises:

sending, by the first communication apparatus, capability information of the first communication apparatus, wherein the capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups, wherein
the cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

**5.** The method according to any one of claims 1 to 4, wherein the method further comprises:
obtaining, by the first communication apparatus, second configuration information, wherein the second configuration information comprises one or more of the following information: configuration information of a control resource set corresponding to each of the at least two communication standards, and configuration information of a search space corresponding to each communication standard.

**6.** The method according to claim 5, wherein

the first communication standard corresponds to a first control resource set, and the second communication standard corresponds to a second control resource set; or
the first communication standard and the second communication standard correspond to a third control resource set, the first communication standard corresponds to a first search space of the third control resource set, and the second communication standard corresponds to a second search space of the third control resource set; or
the first communication standard and the second communication standard correspond to a third search space.

**7.** The method according to claim 5 or 6, wherein the method further comprises:

detecting, by the first communication apparatus, control information corresponding to the second communication standard on the first receive carrier based on one or more of the following information corresponding to the first communication standard: a blind detection capability, a control resource set, and a search space, wherein the control information is control information used to schedule data transmission; or
detecting, by the first communication apparatus, control information corresponding to the second communication standard on the first receive carrier based on one or more of the following information corresponding to the second communication standard: a blind detection capability, a control resource set, and a search space, wherein the control information is control information used to schedule data transmission; and
parsing, by the first communication apparatus, the control information based on the second communication standard.

**8.** The method according to claim 7, wherein

the first communication standard and the second communication standard correspond to a first control information format;
the control information corresponds to the first control information format, the control information comprises first indication information, and the first indication information indicates a communication standard; and
the first communication apparatus parses the control information based on the communication standard indicated by the first indication information.

**9.** The method according to claim 7, wherein
the first communication standard corresponds to a second control information format, and the second communication standard corresponds to a third control information format.

**10.** A communication method, comprising:

sending, by a second communication apparatus, first configuration information, wherein the first configuration information indicates a first communication apparatus to perform carrier aggregation communication on at least two receive carriers, the at least two receive carriers comprise a first receive carrier and a second receive carrier, the first receive carrier corresponds to a first communication standard, the second receive carrier corresponds to a second communication standard, and the first communication standard is different from the second communication standard; and

performing, by the second communication apparatus, carrier aggregation communication on the at least two receive carriers based on the first configuration information.

**11.** The method according to claim 10, wherein

the first configuration information comprises configuration information of at least two receive standard carrier groups, wherein the configuration information of the receive standard carrier group comprises identification information of the receive standard carrier group and identification information of at least one receive carrier in the receive standard carrier group, and the identification information of the receive standard carrier group indicates a communication standard corresponding to the receive standard carrier group.

**12.** The method according to claim 10, wherein

the first configuration information comprises identification information and standard information of the at least two receive carriers, wherein the standard information indicates a communication standard of a receive carrier corresponding to the identification information.

**13.** The method according to any one of claims 10 to 12, wherein the method further comprises:

obtaining, by the second communication apparatus, capability information of the first communication apparatus, wherein the capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups, wherein

the cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

**14.** The method according to any one of claims 10 to 13, wherein the method further comprises:

sending, by the second communication apparatus, second configuration information, wherein the second configuration information comprises one or more of the following information: configuration information of a control resource set corresponding to each of the at least two communication standards, and configuration information of a search space corresponding to each communication standard.

**15.** The method according to claim 14, wherein

the first communication standard corresponds to a first control resource set, and the second communication standard corresponds to a second control resource set; or

the first communication standard and the second communication standard correspond to a third control resource set, the first communication standard corresponds to a first search space of the third control resource set, and the second communication standard corresponds to a second search space of the third control resource set; or

the first communication standard and the second communication standard correspond to a third search space.

**16.** The method according to any one of claims 10 to 15, wherein

the first communication standard and the second communication standard correspond to a first control information format; and

the second communication apparatus sends control information, wherein the control information corresponds to the first control information format, the control information is control information used to schedule data transmission, the control information comprises first indication information, and the first indication information indicates a communication standard.

**17.** The method according to any one of claims 10 to 15, wherein
the first communication standard corresponds to a second control information format, and the second communication standard corresponds to a third control information format.

**18.** A first communication apparatus, comprising:

a transceiver unit, configured to obtain first configuration information, wherein the first configuration information indicates the first communication apparatus to perform carrier aggregation communication on at least two receive carriers, the at least two receive carriers comprise a first receive carrier and a second receive carrier, the first receive carrier corresponds to a first communication standard, the second receive carrier corresponds to a second communication standard, and the first communication standard is different from the second communication standard; and
a processing unit, configured to perform carrier aggregation communication on the at least two receive carriers based on the first configuration information.

**19.** The first communication apparatus according to claim 18, wherein
the first configuration information comprises configuration information of at least two receive standard carrier groups, wherein the configuration information of the receive standard carrier group comprises identification information of the receive standard carrier group and identification information of at least one receive carrier in the receive standard carrier group, and the identification information of the receive standard carrier group indicates a communication standard corresponding to the receive standard carrier group.

**20.** The first communication apparatus according to claim 18, wherein
the first configuration information comprises identification information and standard information of the at least two receive carriers, wherein the standard information indicates a communication standard of a receive carrier corresponding to the identification information.

**21.** The first communication apparatus according to any one of claims 18 to 20, wherein

the transceiver unit is further configured to send capability information of the first communication apparatus, wherein the capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups, wherein
the cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

**22.** The first communication apparatus according to any one of claims 18 to 21, wherein
the transceiver unit is further configured to obtain second configuration information, wherein the second configuration information comprises one or more of the following information: configuration information of a control resource set corresponding to each of the at least two communication standards, and configuration information of a search space corresponding to each communication standard.

**23.** The first communication apparatus according to claim 22, wherein

the first communication standard corresponds to a first control resource set, and the second communication standard corresponds to a second control resource set; or
the first communication standard and the second communication standard correspond to a third control resource set, the first communication standard corresponds to a first search space of the third control resource set, and the second communication standard corresponds to a second search space of the third control resource set; or
the first communication standard and the second communication standard correspond to a third search space.

**24.** The first communication apparatus according to claim 22 or 23, wherein

the processing unit is further configured to detect control information corresponding to the second communication standard on the first receive carrier based on one or more of the following information corresponding to the first communication standard: a blind detection capability, a control resource set, and a search space, wherein the control information is control information used to schedule data transmission; or

the processing unit is further configured to detect control information corresponding to the second communication standard on the first receive carrier based on one or more of the following information corresponding to the second communication standard: a blind detection capability, a control resource set, and a search space, wherein the control information is control information used to schedule data transmission; and

the processing unit is further configured to parse the control information based on the second communication standard.

**25.** The first communication apparatus according to claim 24, wherein

the first communication standard and the second communication standard correspond to a first control information format;

the control information corresponds to the first control information format, the control information comprises first indication information, and the first indication information indicates a communication standard; and

the processing unit is further configured to parse the control information based on the communication standard indicated by the first indication information.

**26.** The first communication apparatus according to claim 24, wherein

quantities of bits of control information corresponding to different communication standards are different; or

the first communication standard corresponds to a second control information format, and the second communication standard corresponds to a third control information format.

**27.** A second communication apparatus, comprising:

a transceiver unit, configured to send first configuration information, wherein the first configuration information indicates a first communication apparatus to perform carrier aggregation communication on at least two receive carriers, the at least two receive carriers comprise a first receive carrier and a second receive carrier, the first receive carrier corresponds to a first communication standard, the second receive carrier corresponds to a second communication standard, and the first communication standard is different from the second communication standard; and

a processing unit, configured to perform carrier aggregation communication on the at least two receive carriers based on the first configuration information.

**28.** The second communication apparatus according to claim 27, wherein
the first configuration information comprises configuration information of at least two receive standard carrier groups, wherein the configuration information of the receive standard carrier group comprises identification information of the receive standard carrier group and identification information of at least one receive carrier in the receive standard carrier group, and the identification information of the receive standard carrier group indicates a communication standard corresponding to the receive standard carrier group.

**29.** The second communication apparatus according to claim 27, wherein
the first configuration information comprises identification information and standard information of the at least two receive carriers, wherein the standard information indicates a communication standard of a receive carrier corresponding to the identification information.

**30.** The second communication apparatus according to any one of claims 27 to 29, wherein

the transceiver unit is further configured to obtain capability information of the first communication apparatus, wherein the capability information of the first communication apparatus indicates one or more of the following capabilities: a communication standard supported by the first communication apparatus, a capability indicating that the first communication apparatus supports inter-radio access technology carrier aggregation RAT CA, a capability indicating that the first communication apparatus supports cross-carrier scheduling of inter-RAT CA, a capability indicating that the first communication apparatus supports cross-carrier scheduling in a same receive standard carrier group, and a capability indicating that the first communication apparatus supports cross-carrier scheduling between different receive standard carrier groups, wherein

the cross-carrier scheduling in a same receive standard carrier group indicates cross-carrier scheduling between at least two receive carriers corresponding to a same receive standard carrier group, and the cross-carrier scheduling between different receive standard carrier groups indicates cross-carrier scheduling between at least two receive carriers corresponding to different receive standard carrier groups.

31. The second communication apparatus according to any one of claims 27 to 30, wherein
the transceiver unit is further configured to send second configuration information, wherein the second configuration information comprises one or more of the following information: configuration information of a control resource set corresponding to each of the at least two communication standards, and configuration information of a search space corresponding to each communication standard.

32. The second communication apparatus according to claim 31, wherein

the first communication standard corresponds to a first control resource set, and the second communication standard corresponds to a second control resource set; or
the first communication standard and the second communication standard correspond to a third control resource set, the first communication standard corresponds to a first search space of the third control resource set, and the second communication standard corresponds to a second search space of the third control resource set; or
the first communication standard and the second communication standard correspond to a third search space.

33. The second communication apparatus according to any one of claims 27 to 32, wherein

the first communication standard and the second communication standard correspond to a first control information format; and
the transceiver unit is further configured to send control information, wherein the control information corresponds to the first control information format, the control information is control information used to schedule data transmission, the control information comprises first indication information, and the first indication information indicates a communication standard.

34. The second communication apparatus according to any one of claims 27 to 32, wherein
the first communication standard corresponds to a second control information format, and the second communication standard corresponds to a third control information format.

35. A communication apparatus, wherein the communication apparatus comprises a processor, wherein the processor is configured to run a computer program or instructions, so that the communication apparatus performs the communication method according to any one of claims 1 to 9 or the communication method according to any one of claims 10 to 17.

36. A communication apparatus, wherein the communication apparatus comprises a processor and a memory, wherein the memory is coupled to the processor, the memory is configured to store a computer program or instructions, and the processor is configured to run the computer program or the instructions, to implement the communication method according to any one of claims 1 to 9 or the communication method according to any one of claims 10 to 17.

37. A communication apparatus, wherein the communication apparatus comprises an input/output interface and a logic circuit, wherein the input/output interface is configured to input and/or output information, and the logic circuit is configured to: perform the communication method according to any one of claims 1 to 9 or the communication method according to any one of claims 10 to 17, and perform processing based on the information and/or generate the information, wherein
the information comprises first configuration information, the first configuration information indicates a first communication apparatus to perform carrier aggregation communication on at least two receive carriers, the at least two receive carriers comprise a first receive carrier and a second receive carrier, the first receive carrier corresponds to a first communication standard, the second receive carrier corresponds to a second communication standard, and the first communication standard is different from the second communication standard.

38. A computer-readable storage medium, wherein the computer-readable storage medium stores computer instructions or a program; and when the computer instructions or the program is run on a computer, the computer is enabled to perform the communication method according to any one of claims 1 to 9 or the communication method according to any one of claims 10 to 17.

39. A computer program product, wherein the computer program product comprises computer instructions; and when some or all of the computer instructions are run on a computer, the computer is enabled to perform the communication method according to any one of claims 1 to 9 or the communication method according to any one of claims 10 to 17.

40. A communication system, wherein the communication system comprises a first communication apparatus that performs the communication method according to any one of claims 1 to 9 and a second communication apparatus that performs the communication method according to any one of claims 10 to 17.

CA architecture                    DC architecture

FIG. 1

Self-scheduling                         Cross-carrier scheduling

FIG. 2

FIG. 3

Network device

Terminal device 1          Terminal device 2

FIG. 4

Terminal device                    Network device

| | | | |
|---|---|---|---|
| RRC | | | RRC |
| SDAP | | SDAP | |
| PDCP | | PDCP | |
| RLC | | RLC | |
| MAC | | MAC | |
| PHY | | PHY | |

| User plane protocol | Control plane protocol | User plane protocol | Control plane protocol |

FIG. 5

| Terminal device | ↔ | Network device | ↔ | Core network | ↔ | External network |

FIG. 6

700

701    707

Processor
CPU0
CPU1

Processor
CPU0
CPU1

704

Memory

Communication line 703

702    705    706

Transceiver | Output device | Input device

FIG. 7

| First communication apparatus | Second communication apparatus |

801: Send first configuration information

802: Perform carrier aggregation communication on at least two receive carriers based on the first configuration information

FIG. 8

901

A first communication apparatus obtains first configuration information

902

The first communication apparatus performs carrier aggregation communication on at least two receive carriers based on the first configuration information

FIG. 9

1001

A second communication apparatus sends first configuration information

1002

The second communication apparatus performs carrier aggregation communication on at least two receive carriers based on the first configuration information

FIG. 10

FIG. 11

Symbol

(a)

| | 0 | 1 | 2 | 3 | 4 | 5 | 6 | 7 | 8 | 9 | 10 | 11 | 12 | 13 | 0 | 1 | 2 | 3 | 4 | 5 |
|---|---|---|---|---|---|---|---|---|---|---|----|----|----|----|---|---|---|---|---|---|
| CC1 | D | D | F | F | U | U | U | D | D | F | F | U | U | U | D | D | D | D | F | U |
| CC2 | D | D | F | F | U | U | U | D | D | F | F | U | U | U | D | D | D | D | F | U |

Symbol

(b)

| | 0 | 1 | 2 | 3 | 4 | 5 | 6 | 7 | 8 | 9 | 10 | 11 | 12 | 13 | 0 | 1 | 2 | 3 | 4 | 5 | 6 |
|---|---|---|---|---|---|---|---|---|---|---|----|----|----|----|---|---|---|---|---|---|---|
| CC1 | D | D | D | D | F | U | U | D | D | D | D | F | U | U | D | D | D | D | F | U | U |
| CC2 | D | D | D | D | D | F | U | D | D | D | D | D | F | U | D | D | D | D | D | F | U |
| CC2 | D | D | D | D | D | F | U | D | D | D | D | D | F | U | D | D | D | D | D | F | U |

FIG. 12

Symbol

| | 0 | 1 | 2 | 3 | 4 | 5 | 6 | 7 | 8 | 9 | 10 | 11 | 12 | 13 | 0 | 1 | 2 | 3 | 4 | 5 | 6 |
|---|---|---|---|---|---|---|---|---|---|---|----|----|----|----|---|---|---|---|---|---|---|
| CC1 | D | D | D | D | F | U | U | D | D | D | D | F | U | U | D | D | D | D | F | U | U |
| CC2 | D | D | D | D | D | F | U | D | D | D | D | D | F | U | D | D | D | D | D | F | U |
| CC2 | D | D | D | D | D | F | U | D | D | D | D | D | F | U | D | D | D | D | D | F | U |

FIG. 13

```
┌──────────────────────┐                          ┌──────────────────────┐
│  First communication │                          │ Second communication │
│      apparatus       │                          │      apparatus       │
└──────────┬───────────┘                          └──────────┬───────────┘
           │                                                 │
           │   801a: Send capability information of the first│
           │            communication apparatus              │
           │─────────────────────────────────────────────────▶
           │                                                 │
           │        801: Send first configuration information │
           ◀─────────────────────────────────────────────────│
           │                                                 │
┌──────────┴─────────────────────────────────────────────┐  │
│ 802: Perform carrier aggregation communication on at    │  │
│ least two receive carriers based on the first           │  │
│ configuration information                               │  │
└──────────┬─────────────────────────────────────────────┘  │
           │                                                 │
```

FIG. 14

```
┌──────────────────────────────┐          ┌──────────────────────┐
│ First communication apparatus│          │ Second communication │
│                              │          │      apparatus       │
└──────────────┬───────────────┘          └──────────┬───────────┘
               │                                      │
               │   1501: Send a blind detection capability
               │──────────────────────────────────────▶
               │                                      │
               │  1502: Send configuration information of scheduling
               │                 information          │
               ◀──────────────────────────────────────│
               │                                      │
               │     1503: Send the scheduling information
               ◀──────────────────────────────────────│
               │                                      │
┌──────────────┴──────────────────────────────────────┐
│ 1504: The first communication apparatus communicates │
│ with the second communication apparatus based on the │
│ scheduling information                               │
└──────────────┬──────────────────────────────────────┘
               │                                      │
```

FIG. 15

FIG. 16

FIG. 17

1801

A first communication apparatus sends a blind detection capability

1802

The first communication apparatus obtains configuration information of scheduling information

1803

The first communication apparatus obtains the scheduling information

1804

The first communication apparatus communicates with a second communication apparatus based on the scheduling information

FIG. 18

1901

A second communication apparatus obtains a blind detection capability

1902

The second communication apparatus sends configuration information of scheduling information

1903

The second communication apparatus sends the scheduling information

1904

The second communication apparatus communicates with a first communication apparatus

FIG. 19

First communication apparatus
200

Transceiver unit
2001

Processing unit
2002

FIG. 20

Second communication
apparatus
210

Transceiver unit
2101

Processing unit
2102

FIG. 21

FIG. 22

## INTERNATIONAL SEARCH REPORT

| International application No. |
|---|
| **PCT/CN2022/088247** |

| A. CLASSIFICATION OF SUBJECT MATTER |
|---|
| H04W 76/16(2018.01)i |
| According to International Patent Classification (IPC) or to both national classification and IPC |

| B. FIELDS SEARCHED |
|---|
| Minimum documentation searched (classification system followed by classification symbols) |
| H04W |
| Documentation searched other than minimum documentation to the extent that such documents are included in the fields searched |
| Electronic data base consulted during the international search (name of data base and, where practicable, search terms used) |
| WPI, EPODOC, CNPAT, CNKI, IEEE, 3GPP: 指示 载波聚合 通信制式 indicate carrier aggregation communication system |

| C. DOCUMENTS CONSIDERED TO BE RELEVANT | | |
|---|---|---|
| Category* | Citation of document, with indication, where appropriate, of the relevant passages | Relevant to claim No. |
| X | WO 2015074191 A1 (HUAWEI TECHNOLOGIES CO., LTD.) 28 May 2015 (2015-05-28) description, p. 18, line 12 to p. 19, line 2 | 1-40 |
| X | CN 104811411 A (CHINA MOBILE COMMUNICATIONS CORP.) 29 July 2015 (2015-07-29) description, paragraphs [0377]-[0433] | 1-40 |
| A | CN 112188479 A (HUAWEI TECHNOLOGIES CO., LTD.) 05 January 2021 (2021-01-05) entire document | 1-40 |
| A | CN 105406891 A (GUANGDONG OPPO MOBILE TELECOMMUNICATIONS CO., LTD) 16 March 2016 (2016-03-16) entire document | 1-40 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 July 2022** | **20 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/088247**

| Patent document cited in search report | | | Publication date (day/month/year) | Patent family member(s) | | | Publication date (day/month/year) |
|---|---|---|---|---|---|---|---|
| WO | 2015074191 | A1 | 28 May 2015 | CN | 104995984 | A | 21 October 2015 |
| CN | 104811411 | A | 29 July 2015 | None | | | |
| CN | 112188479 | A | 05 January 2021 | None | | | |
| CN | 105406891 | A | 16 March 2016 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110484724